(19) Europäisches Patentamt
European Patent Office
Office européen des brevets

(11) EP 4 056 612 B1

(12) EUROPEAN PATENT SPECIFICATION

(45) Date of publication and mention of the grant of the patent:
**18.02.2026 Bulletin 2026/08**

(21) Application number: **22161558.6**

(22) Date of filing: **11.03.2022**

(51) International Patent Classification (IPC):
***C08F 297/04*** (2006.01) ***C08J 5/18*** (2006.01) ***C08L 53/02*** (2006.01) ***C09J 7/24*** (2018.01) ***C09J 153/02*** (2006.01)

(52) Cooperative Patent Classification (CPC):
**C08F 297/044; C08L 53/025; C09J 153/025**

# (54) BLOCK COPOLYMER AND ADHESIVE

BLOCKCOPOLYMER UND KLEBSTOFF

COPOLYMÈRE SÉQUENCÉ ET ADHÉSIF

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.03.2021 JP 2021040680**

(43) Date of publication of application:
**14.09.2022 Bulletin 2022/37**

(73) Proprietor: **ENEOS Materials Corporation**
**Tokyo 105-7109 (JP)**

(72) Inventors:
- **KIKUCHI, Toshimitsu**
  **Tokyo, 105-8640 (JP)**
- **SENGA, Hirofumi**
  **Tokyo, 105-8640 (JP)**
- **NAKAHAMA, Tatsumoto**
  **Tokyo, 105-8640 (JP)**
- **SANO, Takuya**
  **Tokyo, 105-8640 (JP)**
- **FUKUMOTO, Takato**
  **Tokyo, 105-8640 (JP)**
- **SAKAGAMI, Yuto**
  **Tokyo, 105-8640 (JP)**
- **HAYAKAWA, Toshiyuki**
  **Tokyo, 105-8640 (JP)**

(74) Representative: **TBK**
**Bavariaring 4-6**
**80336 München (DE)**

(56) References cited:
**US-A1- 2016 333 235**
**US-B1- 6 291 583**
**US-B1- 6 534 593**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

### TECHNICAL FIELD

The present invention relates to a block copolymer and an adhesive.

### BACKGROUND ART

In the related art, in order to protect surfaces of various members such as an optical member, a metal plate, and a synthetic resin plate from contamination and damage, the surface of the member is coated with a surface protective film. As a material for forming an adhesive layer such as a surface protective film, a hydrogenated conjugated diene polymer has been proposed (see, for example, Patent Literature 1).

Patent Literature 1 discloses that a hydrogenated diene copolymer obtained by hydrogenating a block copolymer containing at least two polymer blocks mainly composed of an aromatic vinyl compound and a copolymer block of an aromatic vinyl compound and a conjugated diene compound is used as a material of an adhesive layer, and a hydrogenated diene copolymer obtained by hydrogenating a block copolymer containing at least two polymer blocks mainly composed of a conjugated diene compound and having a vinyl bond content of less than 20 mol% and a copolymer block of an aromatic vinyl compound and a conjugated diene compound is used as the material of the adhesive layer. Patent Literature 1 discloses that an adhesive film having excellent molding processability and adhesiveness is obtained by adjusting a total content of aromatic vinyl compound unit of a hydrogenated diene copolymer to a predetermined ratio, adjusting a vinyl bond content derived from a conjugated diene compound to a predetermined ratio, or the like.

US 6 291 583 B1 relates to an aromatic vinyl compound-isoprene block copolymer composition comprising (i) 5-50 wt. % a branched copolymer of the formula: $(A-B)_nX$ wherein A is a polymer block of an aromatic vinyl monomer, B is a polymer block of isoprene, and X is a residue of a polyfunctional coupling agent, and (ii) 50-95 wt. % of a diblock copolymer of the formula: A-B wherein A and B are as defined above, wherein this copolymer composition is produced by allowing an aromatic vinyl monomer to contact with an organic lithium initiator to prepare a polymer block A; incorporating isoprene thereto to prepare a diblock copolymer A-B; and then, adding a polyfunctional coupling agent to convert a part of the diblock copolymer A-B to the branched copolymer $(A-B)_nX$.

US 2016/333235 A1 relates to a block copolymer composition having 20% by mass or more and 90% by mass or less of a component (A) and 10% by mass or more and 80% by mass or less of a component (B), wherein the component (A) is a block copolymer having a polymer block mainly comprising a vinyl aromatic monomer unit and a polymer block mainly comprising a conjugated diene monomer unit, and having a weight-average molecular weight of 30,000 or higher and 190,000 or lower; and the component (B) is a block copolymer having a polymer block mainly comprising a vinyl aromatic monomer unit and a polymer block mainly comprising a conjugated diene monomer unit, and having a weight-average molecular weight of 60,000 or higher and 500,000 or lower.

US 6 534 593 B1 relates to a composition which comprises a radial poly(aromatic vinyl)/polyisoprene block copolymer as a major component and which is obtained by reacting a diblock polymer with a coupling agent having a functionality of 4 or higher in the presence of a coupling accelerator, and it contains (a) 1 to 34% by weight of a diblock polymer, (b) 34 to 99% by weight of a four-branch polymer, and (c) 0 to 50% by weight of a two-branch polymer and/or a three-branch polymer, wherein the poly(aromatic vinyl)/polyisoprene block copolymer contained in the composition has a weight-average molecular weight (Mw) of 260,000 to 500,000, and the poly(aromatic vinyl)/polyisoprene block copolymer has a poly(aromatic vinyl) block content of 5 to 24% by weight.

### CITATION LIST

### PATENT LITERATURE

Patent Literature 1: JP-A-2005-170985

### SUMMARY OF INVENTION

The hydrogenated diene copolymer described in Patent Literature 1 has good molding processability, but does not yet have sufficient adhesive performance (for example, peel strength, initial adhesiveness (tackiness) to an adherend, and properties of holding adhesive strength after attachment (low increase in adhesiveness)). In particular, when the hydrogenated diene copolymer is applied to a surface protective film for optical applications, it is necessary to have excellent adhesion performance to a polar resin substrate such as a polycarbonate substrate. In addition, a material of the adhesive layer is required to have a small force (expanding force) necessary for rewinding, for example, when the adhesive layer is used as a film roll in adhesive film applications,. However, it is difficult to develop a material that exhibits all

of the properties in a balanced manner, and further improvement is required.

The present invention has been made in view of the above problems. A main object of the present invention is to provide a block copolymer capable of exhibiting molding processability, adhesive performance, and expandability in a balanced manner.

The present invention provides the following block copolymer and adhesive.

[1] A block copolymer including, 10 mass% or more of a polymer (A1) having a multi-branched structure having four or more polymer chains, wherein the polymer chain includes a polymer block A containing 70 mass% or more of a structural unit derived from a conjugated diene compound, and a polymer block B containing 70 mass% or more of a structural unit derived from an aromatic vinyl compound, wherein a functional group F containing at least one element selected from the group consisting of nitrogen, oxygen, and sulfur is contained at a part or all of the terminals of the four or more polymer chains, and wherein the block polymer has a value α of 0.83 or more represented by the following equation (i), where p is defined as a component proportion (molar proportion) of a structural unit represented by the following formula (1), q is defined as a component proportion (molar proportion) of a structural unit represented by the following formula (2), r is defined as a component proportion (molar proportion) of a structural unit represented by the following formula (3), and s is defined as a component proportion (molar proportion) of a structural unit represented by the following formula (4), in the polymer.

$$\alpha = (p + (0.5 \times r))/(p + q + (0.5 \times r) + s)...(i)$$

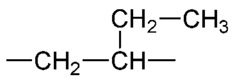
(1)

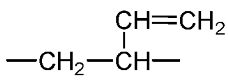
(2)

$-CH_2-CH_2-$ (3)

$-CH_2-CH=CH-CH_2-$ (4)

[2] An adhesive, which is obtained using the block copolymer according to the above [1].

The block copolymer of the present invention can provide an adhesive having excellent molding processability, adhesive performance, and expandability.

DESCRIPTION OF EMBODIMENTS

The following will describe the items relating to the embodiments of the present invention in detail. In the present specification, a numerical range described using "to" represents a range including numerical values described before and after "to" as a lower limit value and an upper limit value.

<<Block Copolymer>>

A block copolymer according to the present disclosure (hereinafter, also referred to as [A]-block copolymer) is a conjugated diene block polymer including a polymer block A having a structural unit derived from a conjugated diene compound as a main component and a polymer block B having a structural unit derived from an aromatic vinyl compound as a main component. In the [A]-block copolymer, when p is defined as a component proportion (molar proportion) of a structural unit represented by the following formula (1), q is defined as a component proportion (molar proportion) of a structural unit represented by the following formula (2), r is defined as a component proportion (molar proportion) of a structural unit represented by the following formula (3), and s is defined as a component proportion (molar proportion) of a structural unit represented by the following formula (4), in the polymer, a value α represented by the following equation (i) is 0.83 or more.

$$\alpha = (p + (0.5 \times r))/(p + q + (0.5 \times r) + s)...(i)$$

[Chem. 2]

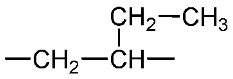

(1)

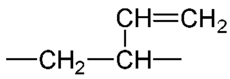

(2)

$-CH_2-CH_2-$

(3)

$-CH_2-CH=CH-CH_2-$

(4)

The [A]-block copolymer contains a branched polymer, which is a polymer having a multi-branched structure. Specifically, the [A]-block copolymer contains a polymer (A1) that is a branched polymer having four or more polymer chain $P^1$s, in the amount of 10 mass% or more with respect to the [A]-block copolymer (100 mass%). Each of the four or more polymer chain $P^1$s of the polymer (A1) has the polymer block A and the polymer block B. A part or all of the terminals of the four or more polymer chain $P^1$s have a functional group F containing at least one element selected from the group consisting of nitrogen, oxygen, and sulfur. Hereinafter, a configuration of the [A]-block copolymer and the method for producing the [A]-block copolymer will be described in detail.

<Polymer Block A>

The polymer block A is a segment mainly composed of a structural unit derived from a conjugated diene compound. Examples of the conjugated diene compound constituting the polymer block A include 1,3-butadiene, isoprene, 2,3-dimethyl-1,3-butadiene, 1,3-pentadiene, 2-methyl-1,3-pentadiene, 1,3-hexadiene, 4,5-diethyl-1,3-octadiene, β-farnesene, and chloroprene. Among these, 1,3-butadiene, isoprene, 1,3-pentadiene, and 2,3-dimethyl-1,3-butadiene are preferable, and 1,3-butadiene and isoprene are more preferable, from a viewpoint of obtaining a polymer that can be industrially used and exhibits excellent physical properties. As the conjugated diene compound, one of the compounds may be used alone, or two or more of the compounds may be used in combination.

The polymer block A may be a segment composed only of a conjugated diene compound, or may further include a structural unit derived from a monomer different from the conjugated diene compound (hereinafter, also referred to as "another monomer a"). Another monomer a is not limited as long as it is a monomer copolymerizable with the conjugated diene compound. Examples of another monomer a include an aromatic vinyl compound, acrylonitrile, methyl(meth) acrylate, and ethyl(meth)acrylate.

The polymer block A contains a structural unit derived from the conjugated diene compound in the amount of 70 mass% or more with respect to total structural units constituting the polymer block A. When the ratio of the structural unit derived from the conjugated diene compound in the polymer block A is less than 70 mass%, the adhesive strength tends to be insufficient, and in particular, initial adhesiveness (tackiness) tends to be low. **In** addition, when the ratio of the structural unit derived from the conjugated diene compound in the polymer block A is less than 70 mass%, a crystalline block segment showing a structure similar to that of low-density polyethylene (LDPE) cannot be sufficiently introduced into the [A]-block copolymer by hydrogenation, adhesiveness tends to easily increase, or a force (expanding force) necessary for rewinding tends to increase when the block segment is formed into a film roll in an adhesive film application. From such a viewpoint, the ratio of the structural unit derived from the conjugated diene compound in the polymer block A is preferably 80 mass% or more, more preferably 90 mass% or more, still more preferably 95 mass% or more, and particularly preferably 98 mass% or more.

The polymer block A is preferably a segment in which a value β represented by the following equation (ii) exceeds 0.20. When the value β of the polymer block A is more than 0.20, the [A]-block copolymer does not become too hard, the adhesion strength can be increased, and an increase in the expanding force can be suppressed. Thus, more than 0.20 of the value β of the polymer block A is preferable.

$$\beta = (p + q)/(p + q + (0.5 \times r) + s) \ldots \text{(ii)}$$

From the above viewpoint, the value β in the polymer block A is preferably 0.30 or more, more preferably 0.40 or more, still more preferably 0.50 or more, and particularly preferably more than 0.60. A vinyl bond content of the polymer block A is, for example, 0.85 or less from the viewpoint of ensuring molding processability.

In the hydrogenated polymer, the value β corresponds to the vinyl bond content (mol%) of the polymer before hydrogenation. The "vinyl bond content" is a value indicating a ratio of a structural unit having a 1,2-bond to all structural units derived from the conjugated diene compound contained in the polymer (or polymer block) before hydrogenation. The vinyl bond content of the polymer before hydrogenation is a value measured by a $^1$H-NMR device. For example, when β is 0.20, the vinyl bond content of the polymer (or polymer block) is 20 mol%.

<Polymer Block B>

The polymer block B is a segment mainly composed of a structural unit derived from an aromatic vinyl compound. Examples of the aromatic vinyl compound constituting the polymer block B include styrene, tert-butylstyrene, α-methylstyrene, p-methylstyrene, p-ethylstyrene, divinylbenzene, 1,1-diphenylstyrene, vinylnaphthalene, vinylanthracene, N,N-diethyl-p-aminoethylstyrene, and vinylpyridine. Among these, styrene is particularly preferable. As the aromatic vinyl compound, one of the compounds may be used alone, or two or more of the compounds may be used in combination.

The polymer block B may be a segment composed only of an aromatic vinyl compound, or may further include a structural unit derived from a monomer different from the aromatic vinyl compound (hereinafter, also referred to as "another monomer b"). The another monomer b is not limited as long as it is a monomer copolymerizable with the aromatic vinyl compound. Examples of the another monomer b include a conjugated diene compound, acrylonitrile, methyl(meth)acrylate, and ethyl(meth)acrylate.

The polymer block B includes a structural unit derived from an aromatic vinyl compound in the amount of 70 mass% or more with respect to the total structural units constituting the polymer block B. In the polymer block B, when the ratio of the structural unit derived from the aromatic vinyl compound is less than 70 mass%, the adhesiveness tends to decrease, the adhesion strength to an adherend (particularly, a polar resin such as a polycarbonate resin) tends to be insufficient, or self-supporting property of the adhesive tends to decrease, so that the increase in adhesiveness tends to easily occur. From such a viewpoint, the ratio of the structural unit derived from the aromatic vinyl compound in the polymer block B is preferably 80 mass% or more, more preferably 90 mass% or more, still more preferably 95 mass% or more, and particularly preferably 98 mass% or more.

<Functional Group F>

The polymer chain $P^1$s of the polymer (A1) have a functional group F containing at least one element selected from the group consisting of nitrogen, oxygen, and sulfur at a part or all of the terminals of the polymer chain $P^1$s. In the [A]-block copolymer, introducing the functional group F into a part or all of free terminals of the polymer (A1) allows for improving the adhesive performance and the molding processability in a balanced manner. The functional group F is preferably introduced into the terminal of the polymer block A or the polymer block B.

Specific examples of the functional group F include a primary amino group, a secondary amino group, a tertiary amino group, a nitrogen-containing group in which two hydrogen atoms of the primary amino group are substituted with two protective groups, a nitrogen-containing group in which one hydrogen atom of the secondary amino group is substituted with one protective group, an imino group, a nitrogen-containing heterocyclic group (for example, a group having a heterocyclic ring such as a pyridine ring or an imide ring), a hydroxyl group, an oxygen-containing group in which one hydrogen atom of a hydroxyl group is substituted with one protective group, a thiol group, and a sulfur-containing group in which one hydrogen atom of a thiol group is substituted with one protective group. The functional group F is preferably a functional group containing nitrogen (nitrogen-containing group), and particularly preferably has at least one selected from the group consisting of a primary amino group, a secondary amino group, a tertiary amino group, and an imide group, from the viewpoint that an effect of improving adhesiveness to an adherend having high polarity is high, and from the viewpoint that excessive adhesion to an adherend having low polarity is suppressed and an effect of improving expandability is high. From the viewpoint of securing a reaction site with a modifying agent (post-modifying agent) or a crosslinking agent that can be used in a subsequent reaction and capable of improving heat resistance, solvent resistance, suppression of adhesive residue, and contamination of the adherend by residues, the present polymer preferably has at least one of a primary amino group and a secondary amino group at a part or all of the terminals of the polymer block A, and particularly preferably has two or more groups of at least one of the primary amino group and the secondary amino group in one molecule.

<Configuration of Polymer (A1)>

One embodiment of the polymer (A1) is a radial polymer (also referred to as a star polymer) having four or more branched structure, as such an embodiment can provide a block polymer having excellent adhesive performance and can form a network structure more efficiently in a reaction with a crosslinking agent capable of reacting with the functional group F to achieve heat resistance, solvent resistance, suppression of adhesive residue, and improvement of contamination resistance due to a low residue. Specifically, a polymer having a structure in which four or more polymer chains including the polymer block A and the polymer block B are allowed to bond to a partial structure derived from a coupling agent is preferable. Preferred specific examples of the polymer (A1) include a block copolymer having a structure represented by the following formula (5).

$$(P^1)n - X^1 \ ...(5)$$

(In formula (5), $P^1$ is a polymer chain having a polymer block A and a polymer block B. $X^1$ is a partial structure derived from the coupling agent. n is an integer of 4 or more).

In the above formula (5), the number of blocks constituting the polymer chain $P^1$, the arrangement of the blocks, includes the polymer block A and the polymer block B. $P^1$ is preferably linear.

Examples of the block structure of $P^1$ include an AB-type diblock body formed of polymer block A/polymer block B, an ABA-type triblock body formed of polymer block A/polymer block B/polymer block A, and a BAB-type triblock body formed of polymer block B/polymer block A/polymer block B. $P^1$ may further include a polymer block C different from the polymer block A and the polymer block B, and may be a polymer chain having four or more blocks. Among these, $P^1$ is preferably an AB-type diblock body, an ABA-type triblock body, or an ABA-type triblock body from the viewpoint that a polymer exhibiting excellent adhesive performance can be produced with a smaller number of blocks and productivity is excellent. From the viewpoint of ensuring the molding processability, from the viewpoint of efficiently forming the network structure with the crosslinking agent, and from the viewpoint of expecting an effect of improving the solvent resistance and the heat resistance, n is preferably an integer of 4 to 10, and more preferably 4 to 6.

When the polymer chain $P^1$ has two or more polymer block As, the vinyl bond contents (that is, the value $\beta$) of the polymer block As may be the same as or different from each other.

One embodiment of the polymer block C is a segment having a structural unit derived from a conjugated diene compound and a structural unit derived from an aromatic vinyl compound. When the polymer (A1) further has such a segment, the adhesive performance (adhesion strength and tackiness) can be improved and the expandability can be improved, and vibration-damping characteristics can be improved. Thus, the polymer (A1) having such a segment is preferable. A distribution of the aromatic vinyl compound in the polymer block C may be, for example, a random form, a tapered form, a partial block form, or any combination thereof. Among these, a random form is preferable.

In the polymer block C, the ratio of the structural unit derived from the conjugated diene compound is preferably more than 30 mass%, more preferably 50 mass% or more, and still more preferably 60 mass% or more with respect to the total structural units constituting the polymer block C. The ratio of the structural unit derived from the conjugated diene compound is preferably 90 mass% or less, and more preferably 85 mass% or less, with respect to the total structural units constituting the polymer block C.

In the polymer block C, the ratio of the structural unit derived from the aromatic vinyl compound is preferably 10 mass% or more, and more preferably 15 mass% or more with respect to the total structural units constituting the polymer block C. The ratio of the structural unit derived from the aromatic vinyl compound is preferably less than 50 mass%, and more preferably 40 mass% or less with respect to the total structural units constituting the polymer block C.

The ratio of the structural unit derived from the conjugated diene compound with respect to all the structural units constituting the polymer (A1) is preferably more than 50 mass%, more preferably 60 mass% or more, and still more preferably 70 mass% or more. The ratio of the structural unit derived from the conjugated diene compound is preferably 98 mass% or less, and more preferably 95 mass% or less with respect to the total structural units constituting the polymer (A1). When the ratio of the structural unit derived from the conjugated diene compound in the polymer (A1) is within the above range, a block copolymer exhibiting good adhesive performance can be obtained. Thus, the ratio of the structural unit derived from the conjugated diene compound in the polymer (A1) within the above range is preferable.

In the polymer (A1), the ratio of the structural unit derived from the aromatic vinyl compound is preferably 2 mass% or more, and more preferably 5 mass% or more, with respect to the total structural units constituting the polymer (A1). The ratio of the structural unit derived from the aromatic vinyl compound is preferably less than 50 mass%, more preferably 40 mass% or less, and still more preferably 30 mass% or less, with respect to the total structural units constituting the polymer (A1). When the ratio of the structural unit derived from the aromatic vinyl compound in the polymer (A1) is within the above range, the polymer (A1) can be suppressed from becoming too hard, and a block copolymer exhibiting good adhesive performance and expandability can be obtained. Thus, the ratio of the structural unit derived from the aromatic vinyl compound in the polymer (A1) within the above range is preferable.

The ratio of the structural unit derived from the aromatic vinyl compound constituting the polymer block B is preferably more than 50 mass%, more preferably 60 mass% or more, and still more preferably 70 mass% or more, with respect to the total amount of the structural units derived from the aromatic vinyl compound contained in the polymer (A1). When the ratio of the structural unit derived from the aromatic vinyl compound constituting the polymer block B to the total amount of the structural units derived from the aromatic vinyl compound contained in the polymer (A1) is within the above range, a polymer having high adhesion strength also to a polar resin substrate can be obtained. Thus, the ratio of the structural unit derived from the aromatic vinyl compound constituting the polymer block B to the total amount of the structural units derived from the aromatic vinyl compound contained in the polymer (A1) within the above range is preferable.

The ratio of the polymer block B to the total amount (100 mass%) of the polymer block A and the polymer block B is

preferably 2 mass% or more, more preferably 5 mass% or more, and still more preferably 8 mass% or more. The ratio of the polymer block B to the total amount of the polymer block A and the polymer block B is preferably less than 50 mass%, more preferably 40 mass% or less, and still more preferably 35 mass% or less. When the ratio of the polymer block B is 2 mass% or more, a glass transition temperature (Tg) of the polymer (A1) can be appropriately increased, and the low increase in adhesiveness and the expandability can be improved in a balanced manner. When the ratio of the polymer block B is less than 50 mass%, the adhesive performance and mechanical properties of the polymer (A1) can be sufficiently ensured. Thus, less than 50 mass% of the ratio of the polymer block B is preferable.

When the polymer (A1) includes two or more polymer block As or polymer block Bs in one molecule, the ratio of the polymer block B to the total amount of the polymer block As and B represents a ratio of the polymer block B (the total amount when two or more polymer block Bs are included) to the total amount of all the polymer block As and B included in the polymer (A1). The ratio of the polymer block B to the total amount of the polymer block A and the polymer block B can be calculated based on the amount of the monomer charged during polymerization.

<Production of Block Copolymer>

A method for producing the [A]-block copolymer. As a polymerization method may be used a solution polymerization, a gas phase polymerization, a bulk polymerization, whereas the solution polymerization is particularly preferable. Moreover, as a polymerization process, either of a batch-wise process and a continuous process may be used. When the solution polymerization is used, examples of a specific polymerization method include a method in which a monomer is polymerized in an organic solvent in the presence of a polymerization initiator and a vinyl content modifier (randomizer) used as necessary to produce a polymer chain $P^1$ having a polymer block A and a polymer block B (polymerization step), a coupling reaction is performed by adding a coupling agent (coupling step), and then a hydrogenation reaction is performed (hydrogenation step).

(Polymerization Step)

As the polymerization initiator, a metal compound having an alkali metal or an alkaline earth metal can be used. Among these, compounds having the alkali metal are preferably used. Specific examples of the metal compound include alkyllithium such as methyllithium, ethyllithium, n-propyllithium, n-butyllithium, sec-butyllithium, and t-butyllithium; 1,4-disalicylate, phenyllithium, stilbene lithium, naphthyllithium, 1,3-bis(1-lithio-1,3-dimethylpentyl)benzene, 1,3-phenylene-bis(3-methyl-1-phenylpentylidene)dilithium, naphthyl sodium, naphthylpotassium, and ethoxypotassium. Among these, a lithium compound is preferable.

The metal compound used as the polymerization initiator may be a metal amide compound having an alkali metal or an alkaline earth metal. When the polymerization for obtaining the [A]-block copolymer is performed in the presence of the metal amide compound, an amino group can be introduced into a polymerization initiation terminal of the block copolymer (more specifically, a free terminal portion of the branched polymer). The [A]-block copolymer obtained by polymerization in the presence of the metal amide compound is preferable as such an [A]-block copolymer exhibits excellent adhesiveness.

The metal amide compound is preferably a compound obtained by mixing a lithium compound (for example, alkyllithium) and a compound having a nitrogen atom (hereinafter, also referred to as an "initiation terminal modifying agent"). The initiation terminal modifying agent is preferably a secondary amine compound. Specific examples of the secondary amine compound include dimethylamine, diethylamine, dipropylamine, dibutylamine, dodecamethyleneimine, N,N'-dimethyl-N'-trimethylsilyl-1,6-diaminohexane, piperidine, pyrrolidine, hexamethyleneimine, heptamethyleneimine, dicyclohexylamine, N-methylbenzylamine, di-(2-ethylhexyl)amine, diallylamine, morpholine, N-(trimethylsilyl)piperazine, N-(tert-butyldimethylsilyl)-4-piperazine, 1,3-ditrimethylsilyl-1,3,5-triazinane. Among these, for the purpose of improving reactivity with a post-modifying agent (maleic anhydride) or a crosslinking agent (polyfunctional epoxy compound) a compound having a group in which at least one of a primary amino group and a secondary amino group is protected with a silyl-based compound can be preferably used.

When the polymerization is performed in the presence of the metal amide compound, the metal amide compound may be prepared by mixing the lithium compound and the initiation terminal modifying agent in advance, and the prepared metal amide compound may be added to a polymerization system to perform the polymerization. Alternatively, the metal amide compound may be prepared by adding the lithium compound and the initiation terminal modifying agent to the polymerization system and mixing the lithium compound and the initiation terminal modifying agent in the polymerization system, and then the polymerization may be performed. The amount of the polymerization initiator to be used (the total amount of the polymerization initiators, when two or more types of the polymerization initiators are used) is preferably 0.01 to 20 mmol, and more preferably 0.05 to 15 mmol, with respect to 100 g of the monomer used for the synthesis of the polymer.

The vinyl content modifier is used for the purpose of, for example, adjusting the vinyl bond content in the polymer.

Examples of the vinyl content modifier include dimethoxybenzene, tetrahydrofuran, dimethoxyethane, diethylene glycol dibutyl ether, diethylene glycol dimethyl ether, 2,2-di(tetrahydrofuryl)propane, 2-(2-ethoxyethoxy)-2-methylpropane, triethylamine, pyridine, N-methylmorpholine, and tetramethylethylenediamine. As the vinyl content modifier, one kind may be used alone, or two or more kinds may be used in combination.

The organic solvent to be used in the polymerization may be an organic solvent that is inert to the reaction. For example, an aliphatic hydrocarbon, an alicyclic hydrocarbon or an aromatic hydrocarbon can be used. Among these, hydrocarbons having 3 to 8 carbon atoms are preferable. Specific examples of the organic solvent include propane, n-butane, isobutane, n-pentane, isopentane, n-hexane, cyclohexane, propene, 1-butene, isobutene, trans-2-butene, cis-2-butene, 1-hexene, 2-hexene, benzene, toluene, xylene, ethylbenzene, heptane, cyclopentane, methylcyclopentane, methylcyclohexane, 1-pentene, 2-pentene, and cyclohexene. As the organic solvent, one kind may be used alone or two or more kinds may be used in combination.

In the solution polymerization, a monomer concentration in the reaction solvent is preferably 5 to 50 mass%, and more preferably 10 to 30 mass%, from the viewpoint of maintaining a balance between productivity and easiness of polymerization control. A temperature of the polymerization reaction is preferably from -30°C to 150°C. The polymerization may be performed while controlling the temperature to be constant, or may be performed while raising the temperature without removing heat. The polymerization reaction is preferably performed under pressure sufficient to substantially keep the monomer in a liquid phase. Such pressure can be obtained by a method such as pressurizing the inside of a reactor with a gas inert to the polymerization reaction.

The reaction product (more specifically, the chain polymer) obtained by the polymerization reaction may be used as a block copolymer by any method. When a block copolymer having the polymer block A and the polymer block B is produced, from the viewpoint of productivity, first, a segment of one of the polymer block A and the polymer block B (hereinafter, also referred to as a "first segment") is produced by polymerizing monomers in the presence of a polymerization initiator. Next, the monomer is polymerized in the presence of the first segment to produce the other segment (hereinafter, also referred to as a "second segment"). In this case, the use of the metal amide compound as the polymerization initiator can provide a block copolymer in which the functional group F is introduced into the polymerization initiation terminal of the first segment. After the polymerization of the second segment, a polymer formed of the first segment, the second segment, and a third segment can be produced by further adding a monomer as necessary and performing polymerization. The third segment may be either the polymer block A or the polymer block B, or may be the polymer block C.

In particular, in the chain polymer (that is, the polymer chain $P^1$) obtained in this step, the first segment is preferably the polymer block A, and the second segment is preferably the polymer block B. In this case, the effect of improving the adhesive performance (in particular, adhesion strength and tackiness) of the [A]-block copolymer can be enhanced. The polymer chain $P^1$ is preferably a triblock body formed of the polymer block A, the polymer block B, and the polymer block A, or the polymer block A, the polymer block B, and the polymer block C, from the viewpoint of further enhancing the effect of improving the adhesive performance. Boundaries of the polymer blocks may not be clearly distinguished from each other. Hereinafter, for the sake of convenience, the second polymer block A from the side of the polymerization initiation terminal may be referred to as a "polymer block A'".

(Coupling Step)

Next, the block copolymer obtained by the polymerization step (that is, the polymer chain $P^1$ constituting the polymer (A1)) is allowed to react with a coupling agent. The coupling agent used in the production of the polymer (A1) and any coupling agent known in the production of the polymer can be used. The coupling agent is preferably a polyfunctional coupling agent having four or more reaction sites with an active terminal of the block copolymer obtained by the polymerization step.

Specific examples of the coupling agent include tetrachlorosilane, tetramethoxysilane, tetrachlorogermanium, tetrachlorotin, and bis(trichlorosilyl)ethane.

As the coupling agent, a compound (hereinafter, also referred to as a "terminal modifying agent") having a functional group F containing at least one element selected from the group consisting of nitrogen, oxygen, and sulfur and having four or more reaction sites with the polymer chain obtained by the polymerization step can also be used. Specific examples of the functional group F contained in the terminal modifying agent include the same groups as the specific examples of the functional group F described in the polymerization step.

Specific examples of such a terminal modifying agent include nitrogen-containing alkoxysilane compounds described in JP-A-2014-177519, JP-A-2016-079217, and WO 2017/221943; and glycidyl group-containing polysiloxanes described in WO 2017/090421. Among these, a polyfunctional coupling agent having a functional group containing nitrogen can be preferably used. The use of a nitrogen-containing polyfunctional coupling agent allows for providing a block copolymer in which high adhesive strength and suppression of increase in adhesiveness are further improved in a balanced manner. Thus, the use of the nitrogen-containing polyfunctional coupling agent is preferable.

The reaction between the block copolymer obtained by the polymerization step and the coupling agent is preferably performed as a solution reaction. From the viewpoint of sufficiently increasing the adhesiveness and the expandability, a usage ratio of the coupling agent (the total amount of the coupling agents, when two or more kinds of the coupling agents are used) is preferably 0.01 mol or more, and more preferably 0.05 mol or more, with respect to 1 mol of the metal atom involved in the polymerization of the polymerization initiator. In addition, from the viewpoint of suppressing a decrease in molding processability and from the viewpoint of maintaining the adhesion strength at a sufficiently high level, the usage ratio of the coupling agent is preferably less than 2.0 mol, and more preferably less than 1.5 mol, with respect to 1 mol of the metal atom involved in the polymerization of the polymerization initiator. As the coupling agent, one kind may be used alone, or two or more kinds may be used in combination.

The temperature of the reaction is usually the same as that of the polymerization reaction, and is preferably from -30°C to 150°C. When the reaction temperature is low, the viscosity of the polymer after coupling tends to increase. When the reaction temperature is high, the polymerization terminal tends to be deactivated. A reaction time is preferably 1 minute to 5 hours, and more preferably 2 minutes to 1 hour.

**In** the coupling reaction for obtaining the [A]-block copolymer, the coupling rate is preferably 30% or more, more preferably 35% or more, still more preferably 50% or more, and still more preferably 65% or more, from the viewpoint of improving the adhesiveness of the [A]-block copolymer, suppression of increase in adhesiveness, and expandability, and from the viewpoint of efficiently forming a network structure at the time of reaction with the crosslinking agent. From the viewpoint of obtaining a polymer having high fluidity and good molding processability, the coupling rate is preferably 98% or less, and more preferably 95% or less. The term "coupling rate" refers to the ratio of a polymer bonded via the coupling agent to the polymer used in the reaction with the coupling agent (that is, the polymer chain P1 constituting the present polymer). The coupling rate can be calculated from a peak area ratio of a GPC curve obtained using gel permeation chromatography (GPC).

(Hydrogenation Step)

In this step, the block copolymer obtained in the coupling step is hydrogenated. Methods and conditions of the hydrogenation reaction may be any method and conditions as long as a block copolymer having a desired hydrogenation rate can be obtained. Specific examples of the hydrogenation method include a method in which a catalyst containing an organometallic compound of titanium as a main component is used as a hydrogenation catalyst, a method in which a catalyst formed of an organometallic compound of iron, nickel or cobalt and an organometallic compound such as alkylaluminum is used, a method in which an organic complex of an organometallic compound of ruthenium or rhodium is used, and a method in which a catalyst in which a metal such as palladium, platinum, ruthenium, cobalt or nickel is supported on a support such as carbon, silica, or alumina is used. Among the various methods, a method of performing hydrogenation under mild conditions of low pressure and low temperature using an organometallic compound of titanium alone or a homogeneous catalyst formed of an organometallic compound of titanium and an organometallic compound of lithium, magnesium, or aluminum (JP-B-S63-4841 and JP-B-H1-37970) is industrially preferable, and the hydrogenation selectivity to a double bond of butadiene is also high and suitable.

The hydrogenation of the block copolymer is preferably performed using a solvent which is inert to a catalyst and is capable of dissolving the block copolymer. Preferred examples of the solvent include aliphatic hydrocarbons (for example, n-pentane, n-hexane, and n-octane), alicyclic hydrocarbons (for example, cyclohexane and cycloheptane), aromatic hydrocarbons (for example, benzene and toluene), and ethers (for example, diethyl ether and tetrahydrofuran), which may be used alone or as mixtures containing these as main components.

The hydrogenation reaction is typically performed by holding the block polymer at a predetermined temperature in a hydrogen or inert atmosphere, adding a hydrogenation catalyst under stirring or non-stirring, and then introducing hydrogen gas to pressurize the block polymer to a predetermined pressure. The inert atmosphere means an atmosphere which does not react with any components that participate in the hydrogenation reaction and includes helium, neon or argon. Air and oxygen may oxidize the catalyst to deactivate the catalyst. In addition, nitrogen acts as a catalytic poison during the hydrogenation reaction, and may reduce hydrogenation activity. Therefore, the inside of the hydrogenation reactor is preferably an atmosphere of hydrogen gas alone.

The hydrogenation reaction process for obtaining the hydrogenated block copolymer may be any of a batch process, a continuous process, and a combination thereof. When a titanocene diaryl-based compound is used as the hydrogenation catalyst, the titanocene diaryl-based compound may be added alone to the reaction solution as it is, or may be added as a solution of an inert organic solvent. The addition amount of the catalyst is, for example, 0.02 to 20 mmol per 100g of the block polymer before hydrogenation.

When the hydrogenation rate of the [A]-block copolymer is less than 75%, the molding processability tends to deteriorate due to gelation and adhesive residue tends to be easily generated at the time of peeling from an adherend. From the viewpoint of improving the molding processability and reducing the adhesive residue, the hydrogenation rate of the [A]-block copolymer is 83% or more, preferably 85% or more, more preferably 90% or more, and particularly preferably

95% or more. The hydrogenation rate of the [A]-block copolymer is, for example, 99% or less.

The value $\alpha$ represented by the above equation (i) corresponds to the hydrogenation rate of the polymer. For example, when $\alpha = 0.75$, the hydrogenation rate of the polymer is 75%. The hydrogenation rate and $\alpha$ of the polymer can be adjusted by, for example, adjusting the time of the hydrogenation reaction or controlling an integrated amount of hydrogen to be supplied. In the present specification, the hydrogenation rate is a value measured by a $^1$H-NMR device.

After the hydrogenation, the catalyst residue is removed, or a phenol-based or amine-based antioxidant is added, if necessary, and then a hydrogenated conjugated diene-based polymer (that is, the [A]-block copolymer) is isolated from a polymer solution. Isolation of the polymer can be performed, for example, by a method in which acetone or alcohol is added to the polymer solution to precipitate the polymer solution, a method in which the polymer solution is put into boiling water with stirring, and the solvent is removed by distillation.

(Post-Modification Step)

The block polymer after the hydrogenation reaction may be used as it is for a desired application. The block polymer after the hydrogenation reaction may be further subjected to a modification treatment (post-modification step). Such a modification treatment can further improve suppression of increase in the adhesiveness of the present polymer and the expandability. Thus, such a modification is preferable. In particular, in a polymer in which a primary amine or a secondary amine is introduced into a terminal by the modification treatment, a modification ratio of a modifying agent in the post-modification step (hereinafter, also referred to as a "post-modifying agent") is improved, and generation of residues of the post-modifying agent can be suppressed. For this reason, such a modification allows for suppressing contamination of the adherend due to re-peeling and diffusion of a contamination component to the adherend due to permanent adhesion. Thus, such a modification is preferable.

A weight average molecular weight (Mw) of the [A]-block copolymer in terms of polystyrene as measured by the gel permeation chromatography (GPC) is preferably $5.0 \times 10^4$ to $7.0 \times 10^5$. When the Mw is $5.0 \times 10^4$ or more, mechanical properties are excellent, the adhesive residue is less likely to occur when peeled from the adherend, a holding force is high, and a deviation between the adherend and the adhesive can be reduced. When the Mw is $7.0 \times 10^5$ or less, the fluidity of the [A]-block copolymer can be sufficiently ensured, and the molding processability can be improved. The Mw of the [A]-block copolymer is more preferably $7.0 \times 10^4$ or more, still more preferably $1.0 \times 10^5$ or more. The Mw of the [A]-block copolymer is more preferably $6.5 \times 10^5$ or less. The weight average molecular weight (Mw) of the [A]-block copolymer is a value determined from all peaks of a GPC curve measured by GPC before hydrogenation. Hereinafter, it is also referred to as "total weight average molecular weight".

In the [A]-block copolymer, a peak top molecular weight of the peak having the smallest molecular weight (hereinafter, also referred to as "1st peak weight average molecular weight") measured by GPC is preferably in a range from $1.2 \times 10^4$ to $2.2 \times 10^5$. When the 1st peak weight average molecular weight is in the above range, the adhesive having a good balance between the adhesion strength and the molding processability can be obtained, and the adhesive residue can be less likely to occur while having good tackiness. Thus, the 1st peak weight average molecular weight in the above range is preferable. The 1st peak weight average molecular weight of the [A]-block copolymer is more preferably $2.0 \times 10^4$ or more, still more preferably $3.0 \times 10^4$ or more. From the viewpoint that the molding processability can be made more excellent, the 1st peak weight average molecular weight is more preferably $2.0 \times 10^5$ or less, and still more preferably $1.9 \times 10^5$ or less. The 1st peak weight average molecular weight is a value obtained from a GPC curve measured by the GPC before hydrogenation.

The [A]-block copolymer preferably has a melt flow rate (MFR) measured at 230°C under a load of 21.2 N of 0.1 to 100 g/10 min. In a production process of the adhesive film, when a resin constituting a substrate material layer and the [A]-block copolymer constituting the adhesive layer are subjected to co-extrusion and molding, the molding processability can be improved by setting the MFR to the range described above. The MFR of the [A]-block copolymer is more preferably 0.3 g/10 min or more, still more preferably 0.5 g/10 min or more. The MFR of the [A]-block copolymer is more preferably 50 g/10 min or less, still more preferably 30 g/10 min or less.

The [A]-block copolymer obtained by the above steps includes the polymer (A1) having a multi-branched structure having four or more polymer chains. The polymer (A1) typically has a structure in which four or more polymer chains are allowed to bond to a partial structure derived from the coupling agent. The coupling agent preferably has a nitrogen-containing functional group from the viewpoint of improving various properties such as adhesive performance (adhesion strength, tackiness, low increase in adhesiveness), molding processability, expandability, and resistance to generation of the adhesive residue in a balanced manner.

The [A]-block copolymer preferably contains a linear polymer (A2) together with the polymer (A1). More specifically, the polymer (A2) is a polymer obtained by the polymerization step, and is a hydrogenated product of an unreacted polymer that is not subjected to a reaction with the coupling agent among the block copolymers before coupling. The polymer (A2) preferably has a primary amino group, a secondary amino group, or a tertiary amino group at one terminal portion from the viewpoint of reducing the expanding force while increasing the adhesion strength. Such a

terminal-modified chain polymer can be obtained by using the metal amide compound as the polymerization initiator in the polymerization step.

The ratio of the polymer (A1) in the [A]-block copolymer is 10 mass% or more when the amount of the [A]-block copolymer is taken as 100 mass%. When the ratio of the polymer (A1) to the [A]-block copolymer is less than 10 mass%, the adhesion strength and the low increase in adhesiveness are not sufficient, and the adhesive performance is inferior. When the ratio of the polymer (A1) to the [A]-block copolymer is less than 10 mass%, the expandability tends to deteriorate and the adhesive residue tends to be easily generated at the time of peeling from the adherend. The use of the [A]-block copolymer in which the ratio of the polymer (A1) to the [A]-block copolymer is less than 10 mass% in combination with the crosslinking agent tends to make it difficult to efficiently form a network and tends not to sufficiently ensure the heat resistance and the solvent resistance. The ratio of the polymer (A1) in the [A]-block copolymer is preferably 20 mass% or more, more preferably 35 mass% or more, still more preferably 50 mass% or more, and still more preferably 60 mass% or more. The ratio of the polymer (A1) in the [A]-block copolymer is preferably 90 mass% or less, and more preferably 80 mass% or less. When the ratio of the polymer (A1) in the [A]-block copolymer is 90 mass% or less, the tackiness can be increased. Thus, 90 mass% or less of the ratio of the polymer (A1) in the [A]-block copolymer is preferable.

A content ratio of the polymer (A1) in the [A]-block copolymer can be calculated by subjecting a waveform of a coupling polymer in a measurement chart by the gel permeation chromatography (GPC) to component separation.

The ratio of the polymer (A1) to the total amount (100 mass%) of the polymer (A1) and the polymer (A2) in the [A]-block copolymer is preferably 10 mass% or more, preferably 20 mass% or more, more preferably 35 mass% or more, still more preferably 50 mass% or more, and still more preferably 60 mass% or more. The ratio of the polymer (A1) is preferably 90 mass% or less, more preferably 80 mass% or less, with respect to the total amount of the polymer (A1) and the polymer (A2).

<<Adhesive and Adhesive Film>>

The [A]-block copolymer has excellent adhesive performance, and thus, the [A]-block copolymer is suitable for use in the adhesive applications. The adhesive obtained using the [A]-block copolymer (hereinafter, also referred to as "the present adhesive") may be formed of only the [A]-block copolymer, or may further contain a component different from the [A]-block copolymer (hereinafter, also referred to as "another component"). Examples of another component include a tackifier. Blending the tackifier to the present adhesive allows for improving an initial adhesive strength of the adhesive.

As the tackifier, those generally used in adhesive applications, such as petroleum resins (for example, aliphatic copolymers, aromatic copolymers, aliphatic and aromatic copolymers, and alicyclic copolymers), coumarone-indene resins, terpene resins, terpene phenol resins, rosin resins, (alkyl)phenol resins, xylene resins, and hydrogenated products of these, can be used. The tackifier may be used alone or in combination of two or more thereof.

In addition to the above, examples of another components include a polyolefin-based resin, an antioxidant, an ultraviolet absorber, a colorant, a light stabilizer, a thermal polymerization inhibitor, an antifoaming agent, a leveling agent, an antistatic agent, a surfactant, a storage stabilizer, an antioxidant, a flame retardant, and various fillers. **In** the present adhesive, a blending ratio of another component can be appropriately set according to each component as long as the effect of the present disclosure is not impaired.

Alternatively, a composition containing the hydrogenated block polymer and the crosslinking agent may be allowed to react with each other while being subjected to shear deformation to crosslink the hydrogenated block polymer. Forming a crosslinked structure in the hydrogenated block copolymer allows for further improving the solvent resistance and the mechanical strength. As the crosslinking agent, a compound having two or more functional groups capable of reacting with the functional group F can be preferably used. Examples of such a crosslinking agent include an isocyanate-based crosslinking agent, an epoxy-based crosslinking agent, an aziridine-based crosslinking agent, a melamine-based crosslinking agent, an aldehyde-based crosslinking agent, an amine-based crosslinking agent, a chelate-based crosslinking agent, a carbodiimide-based crosslinking agent, a hydroxyl group-containing compound, an acid compound, an acid anhydride, and a radical generator.

Examples of the isocyanate-based crosslinking agent include aromatic isocyanate-based crosslinking agents such as tolylene diisocyanate-based crosslinking agents such as 2,4-tolylene diisocyanate and 2,6-tolylene diisocyanate, xylylene diisocyanate-based crosslinking agents such as 1,3-xylylene diisocyanate, diphenylmethane-based crosslinking agents such as diphenylmethane-4,4-diisocyanate, and naphthalene diisocyanate-based crosslinking agents such as 1,5-naphthalene diisocyanate; alicyclic isocyanate-based crosslinking agents such as isophorone diisocyanate, 1,4-cyclohexane diisocyanate, 4,4'-dicyclohexylmethane diisocyanate, methylcyclohexane diisocyanate, isopropylidene dicyclohexyl-4,4'-diisocyanate, 1,3-diisocyanatomethylcyclohexane, and norbornane diisocyanate; aliphatic isocyanate-based crosslinking agents such as hexamethylene diisocyanate and trimethylhexamethylene diisocyanate; and adducts, burettes, and isocyanurates of the isocyanate-based compounds.

Examples of the epoxy-based crosslinking agent include bisphenol A-epichlorohydrin epoxy resins, ethylene glycol diglycidyl ether, polyethylene glycol diglycidyl ether, glycerin diglycidyl ether, glycerin triglycidyl ether, 1,6-hexanediol diglycidyl ether, trimethylolpropane triglycidyl ether, sorbitol polyglycidyl ether, polyglycerol polyglycidyl ether, pentaerythritol polyglycidyl ether, and diglycerol polyglycidyl ether.

Examples of the aziridine-based crosslinking agent include tetramethylolmethane-tri-β-aziridinyl propionate, trimethylolpropane-tri-β-aziridinyl propionate, N,N'-diphenylmethane-4,4'-bis (1-aziridinecarboxyamide), and N,N'-hexamethylene-1,6-bis(1-aziridinecarboxyamide).

Examples of the melamine-based crosslinking agent include hexamethoxymethylmelamine, hexaethoxymethylmelamine, hexapropoxymethylmelamine, hexabutoxymethylmelamine, hexapentyloxymethylmelamine, hexyloxymethylmelamine, and melamine resins.

Examples of the aldehyde-based crosslinking agent include glyoxal, malonedialdehyde, succinedialdehyde, maleindialdehyde, glutaradialdehyde, formaldehyde, acetaldehyde, and benzaldehyde.

Examples of the amine-based crosslinking agent include hexamethylenediamine, triethyldiamine, polyethyleneimine, hexamethylenetetraamine, diethylenetriamine, triethyltetraamine, isophoronediamine, an amino resin, and polyamide.

Examples of the metal chelate-based crosslinking agent include acetylacetone and acetoacetyl ester coordination compounds of polyvalent metals such as aluminum, iron, copper, zinc, tin, titanium, nickel, antimony, magnesium, panalium, chromium, and zirconium.

Examples of the carbodiimide-based crosslinking agent include a polyfunctional carbodiimide compound and a polymer-based carbodiimide compound.

Examples of the hydroxyl group-containing compound include a polyether polyol, a polyester polyol, an acrylic polyol, a polybutadiene polyol, and a polyisoprene polyol.

Examples of the polyfunctional crosslinking agent containing a carboxy group include aromatic dicarboxylic acids such as σ-phthalic acid, isophthalic acid, terephthalic acid, 1,4-dimethylterephthalic acid, 1,3-dimethylisophthalic acid, 5-sulfo-1,3-dimethylisophthalic acid, 4,4-biphenyldicarboxylic acid, 1,4-naphthalenedicarboxylic acid, 2,6-naphthalenedicarboxylic acid, norbornenedicarboxylic acid, diphenylmethane-4,4'-dicarboxylic acid, and phenylindanedicarboxylic acid; aromatic dicarboxylic acid anhydrides such as phthalic anhydride, 1,8-naphthalenedicarboxylic acid anhydride, and 2,3-naphthalenedicarboxylic acid anhydride; alicyclic dicarboxylic acids such as hexahydrophthalic acid; alicyclic dicarboxylic acid anhydrides such as hexahydrophthalic anhydride, 3-methyl-hexahydrophthalic anhydride, 4-methyl-hexahydrophthalic anhydride, and 1,2-cyclohexanedicarboxylic anhydride; and aliphatic dicarboxylic acids such as oxalic acid, malonic acid, succinic acid, adipic acid, sebacic acid, azelaic acid, suberic acid, maleic acid, chloromaleic acid, fumaric acid, dodecanedioic acid, pimelic acid, citraconic acid, glutaric acid, and itaconic acid.

Examples of the acid anhydride include pyromellitic anhydride, benzophenonetetracarboxylic dianhydride, biphenyltetracarboxylic dianhydride, oxydiphthalic dianhydride, diphenylsulfonetetracarboxylic dianhydride, diphenylsulfide tetracarboxylic dianhydride, butanetetracarboxylic dianhydride, perylenetetracarboxylic dianhydride, and naphthalenetetracarboxylic dianhydride.

The radical generator is used to generate radicals by heating or irradiating light such as ultraviolet rays when the adhesive layer constituting a part of an adhesive film is produced. The present polymer can be crosslinked by generating the radicals. The radical generator is preferably a photoradical generator that generates the radicals by irradiation with light such as ultraviolet rays. Specific examples of the photoradical generator include hydroxyketones, benzyl dimethyl ketals, aminoketones, acylphosphine oxides, and benzophenones. The photoradical generators may be used alone or in combination of two or more.

The radical generator may be an oligomer type photoradical generator. The oligomer type photoradical generator is a low molecular weight polymer of a monomer having a functional group capable of generating the radicals by irradiation with light such as the ultraviolet rays. Such an oligomer type photoradical generator has two or more radical generation points in one molecule, is hardly affected by crosslinking inhibition by oxygen and can be used for crosslinking treatment in a small amount. Such an oligomer type photoradical generator is not scattered even in a solvent-free hot melt state at the time of coating on a substrate and is not extracted from a polymer. From the above viewpoints, such an oligomer type photoradical generator is preferable.

Specific examples of the oligomer type photoradical generator include an oligomer obtained by polymerizing acrylated benzophenone (manufactured by UCB, trade name: "Ebecryl P36"), an oligomer obtained by polymerizing a reaction product of a primary hydroxyl group of 1-[4-(2-hydroxyethoxy)phenyl]-2-hydroxy-2-methyl-1-propan-1-one (manufactured by BASF, trade name: "Irgacure 2959") and 2-isocyanatoethyl methacrylate, and 2-hydroxy-2-methyl [4-(1-methylvinyl)phenyl]propanol oligomer (manufactured by Lamberti, trade name: "Esacure KIP150"). A molecular weight of the oligomer type photoradical generator is preferably about 50,000 or less.

The crosslinking agent may be used alone or in combination of two or more kinds thereof. The amount of the crosslinking agent to be used can be appropriately determined depending on performance required for a target final composition. The amount of the crosslinking agent to be used is usually from 0.1 to 20 parts by mass, preferably from 0.2 to 10 parts by mass, with respect to 100 parts by mass of the present polymer. The reaction between the present polymer and the crosslinking agent may be performed in the presence of a curing catalyst, if necessary.

The present adhesive can be used in various applications. Specifically, the present adhesive can be used as an adhesive tape, an adhesive label, an adhesive sheet, an assembly, a building material protection film, a resin plate protection film, an automobile protection film, a protection film for an optical member (for example, for various displays such as a liquid crystal display and for a light guide plate), and various adhesive films such as an interlayer film for laminated glass. In particular, the present adhesive is suitable for use as an optical surface protective film (for example, a surface protective film for an optical film).

The present polymer is excellent in various properties such as initial adhesiveness, low increase in adhesiveness, expandability, adhesive residue suppression, and solvent resistance, and thus can be used for various applications. Specifically, in addition to the adhesive layer of the surface protective film, the adhesive layer of the adhesive film of the structure, and a modifier of a resin composition, the present polymer can also be used as a molded article. Furthermore, the present polymer is excellent in vibration damping properties, and can be used for various applications such as a vibration damping material, a vibration damping film, and a vibration damping sheet.

The present disclosure also provides a laminate including an X layer containing the present polymer and a Y layer laminated on at least one surface of the X layer. As such a laminate, for example, laminated glass is suitable. Specifically, by forming the X layer as an interlayer film for laminated glass, the Y layer as a glass layer, and laminating the layers to form the laminated glass, not only excellent vibration damping properties but also excellent sound insulation can be expected. In addition to the glass layer, the Y layer can be appropriately selected according to various applications. Examples of the application include a laminate in which a layer containing a thermoplastic resin other than the present polymer is a Y layer. Examples of such a thermoplastic resin include a polyvinyl acetal resin, an ionomer, an ethylene-vinyl acetate copolymer, a urethane resin, and a polyamide resin.

Other applications of the present polymer include, for example, the following applications.

(1) Pelet, bail, sound absorbing material, sound insulating material, dam rubber, shoe sole material, floor material, weather strip, floor mat, dash insulator, roof lining, door panel, engine head cover, door hole seal and fender liner.

(2) Various products in the field of automobiles: for example, cooling components such as a thermostat housing, a radiator tank, a radiator hose, a water outlet, a water pump housing, and a rear joint; intake and exhaust system components such as an intercooler tank, an intercooler case, a turbo duct pipe, an EGR cooler case, a resonator, a throttle body, an intake manifold, and a tail pipe; fuel system components such as a fuel delivery pipe, a gasoline tank, a quick connector, a canister, a pump module, a fuel pipe, an oil strainer, a lock nut, and a sealing material; structural components such as a mount bracket, a torque rod, and a cylinder head cover; drive system components such as a bearing retainer, a gear retainer, a lamp head gear, an HVAC gear, a slide door roller, and a clutch peripheral component; brake system components such as an air brake tube; in-vehicle electric components such as a wire connector, a motor component, a sensor, an ABS, a combination switch, an in-vehicle switch, and an electronic control unit (ECU) box in an engine room; interior and exterior components such as a slide door damper, a door laminator stay, a door mirror bracket, a mirror stay, a roof mount rail, an engine bracket, and an air cleaner; inner and outer components such as a door checker, a door chain checker, a plastic chain, an emblem, a breaker cover, a breaker grill, an air louver, an air louver, a bulge, a bulge, a back door, a back door, a back door, a fuel sender module, a fuel sender module, a floor mat, a dashboard, a dashboard, and tires.

(3) Various products in the field of home electric appliances: for example, a sealing material, an adhesion agent, an adhesive, a packing, an O-ring, a belt, a sound insulating material, in various electric products such as various recorders such as televisions, Blu-ray recorders, and HDD recorders, projectors, game machines, digital cameras, home videos, antennas, speakers, electronic dictionaries, IC recorders, facsimiles, copiers, telephones, door phones, rice cookers, microwave ovens, refrigerators, dishwasher machines, dishdriers, IH cooking heaters, hot plates, cleaners, washing machines, chargers, sewing machines, irons, dryers, electric bicycles, air cleaners, water purifiers, electric toothbrushes, lighting fixtures, air conditioners, outdoor machines of air conditioners, dehumidifiers, and humidifiers.

The present polymer can also be used as a modifier for improving properties such as toughness and impact resistance of the thermoplastic resin. Examples of the thermoplastic resin in which the present polymer is blended as a modifier include polypropylene, polyethylene, polystyrene, polycarbonate, polyester, polyarylene, polyarylene ether, polyarylene sulfide, polyamide, polyimide, and ABS resin.

[Examples]

Hereinafter, the present invention will be specifically described based on Examples. In Examples and Comparative Examples, "part(s)" and "%" are based on mass unless otherwise specified.

1. Physical Property Measurement Method

Methods for measuring various physical properties of the polymer are as follows.

[Vinyl Bond Content (mol%)]: Using the polymer before hydrogenation, calculation was performed from a $^1$H-NMR spectrum measured with a 500 MHz device.

[1st Peak Weight Average Molecular Weight]: A holding time of a peak having the longest holding time in a GPC curve obtained using gel permeation chromatography (GPC) (HLC-8120GPC (product name (manufactured by Tosoh Corporation))) was determined in terms of polystyrene.

(GPC conditions)

Column: Product name "GMHXL" (manufactured by Tosoh Corporation), two columns
Column temperature: 40°C
Mobile phase: tetrahydrofuran
Flow rate: 1.0 ml/min
Sample concentration: 10 mg/20 ml

[Total Weight Average Molecular Weight]: Polystyrene conversion was obtained from the GPC curve obtained by using the GPC (HLC-8120GPC (product name (manufactured by Tosoh Corporation))).

[Coupling Rate]: The coupling rate was calculated from a peak area ratio of the GPC curve obtained using the GPC (HLC-8120GPC (product name (manufactured by Tosoh Corporation))).

[Hydrogenation Rate]: The hydrogenation rate was calculated from the $^1$H-NMR spectrum measured with the 100 MHz device using ethylene tetrachloride as a solvent.

[Melt Flow Rate (MFR)] : Measured at 230°C under a load of 21.2 N in accordance with JIS K7210.

2. Production of Block Copolymer

[Example 1]: Production of Polymer (A-1)

A nitrogen-substituted reaction vessel was charged with 550 parts of degassed and dehydrated cyclohexane, 14 parts of tetrahydrofuran, 0.11 parts of piperidine, and 0.11 parts of n-butyllithium, and 20 parts of 1,3-butadiene was added to the reaction vessel at a polymerization initiation temperature of 40°C to perform temperature rising polymerization. After the polymerization conversion rate reached 99% or more, 10 parts of styrene was added at a polymerization initiation temperature of 40°C to perform the temperature rising polymerization. After the polymerization conversion rate reached 99% or more, a reaction solution was cooled to 30°C, 70 parts of 1,3-butadiene was added to the reaction solution, and further temperature rising polymerization was performed. After the polymerization conversion rate reached 99% or more, 0.05 parts of tetrachlorosilane was added, and further temperature rising polymerization was performed. The obtained polymer was a block copolymer having a polymer block A containing a structural unit derived from 1,3-butadiene and having a vinyl bond content of 70 mol%, a polymer block B containing a structural unit derived from styrene, and a polymer block A' containing a structural unit derived from 1,3-butadiene and having a vinyl bond content of 70 mol%. In the block copolymer, the 1st peak weight average molecular weight was 110,000, the total weight average molecular weight was 340,000, and the coupling rate was 75%.

Thereafter, 0.04 parts of diethylaluminum chloride and 0.10 parts of bis(cyclopentadienyl) titanium furyloxychloride were added to the reaction vessel, and the mixture was stirred. The hydrogenation reaction was started at a hydrogen gas supply pressure of 0.7 MPa-Gauge and a reaction temperature of 80°C. After 3.0 hours, the reaction solution was taken out from the reaction vessel at 60°C and a normal pressure. Next, 0.2 part of 2,6-di-tert-butyl-p-cresol was added to the obtained polymer solution, and the mixture was stirred and introduced into water to remove the solvent by steam distillation, followed by drying with a hot roll whose temperature was adjusted to 110°C, thereby obtaining a polymer (A-1) in which the hydrogenation rate of the conjugated diene portion was 98% and the MFR was 3.0 g/10 min. Various physical properties of the obtained polymer (A-1) are shown in Table 1.

[Example 2]: Production of Polymer (A-2)

A nitrogen-substituted reaction vessel was charged with 550 parts of degassed and dehydrated cyclohexane, 14 parts of tetrahydrofuran, 0.15 parts of piperidine, and 0.16 parts of n-butyllithium, and 20 parts of 1,3-butadiene was added to the reaction vessel at a polymerization initiation temperature of 40°C to perform temperature rising polymerization. After

the polymerization conversion rate reached 99% or more, 10 parts of styrene was added at a polymerization initiation temperature of 40°C to perform the temperature rising polymerization. After the polymerization conversion rate reached 99% or more, a reaction solution was cooled to 30°C, 70 parts of 1,3-butadiene was added to the reaction solution, and further temperature rising polymerization was performed. After the polymerization conversion rate reached 99% or more, 0.08 parts of tetrachlorosilane was added, and further temperature rising polymerization was performed. The obtained polymer was a block copolymer having a polymer block A containing a structural unit derived from 1,3-butadiene and having a vinyl bond content of 71 mol%, a polymer block B containing a structural unit derived from styrene, and a polymer block A' containing a structural unit derived from 1,3-butadiene and having a vinyl bond content of 72 mol%. In the block copolymer, the 1st peak weight average molecular weight was 80,000, the total weight average molecular weight was 260,000, and the coupling rate was 70%.

Thereafter, 0.04 parts of diethylaluminum chloride and 0.10 parts of bis(cyclopentadienyl) titanium furyloxychloride were added to the reaction vessel, and the mixture was stirred. The hydrogenation reaction was started at a hydrogen gas supply pressure of 0.7 MPa-Gauge and a reaction temperature of 80°C. After 3.0 hours, the reaction solution was taken out from the reaction vessel at 60°C and a normal pressure. Next, 0.2 part of 2,6-di-tert-butyl-p-cresol was added to the obtained polymer solution, and the mixture was stirred and introduced into water to remove the solvent by steam distillation, followed by drying with a hot roll whose temperature was adjusted to 110°C, thereby obtaining a polymer (A-2) in which the hydrogenation rate of the conjugated diene portion was 98% and the MFR was 16.2 g/10 min. Various physical properties of the obtained polymer (A-2) are shown in Table 1.

[Example 3]: Production of Polymer (A-3)

A nitrogen-substituted reaction vessel was charged with 550 parts of degassed and dehydrated cyclohexane, 14 parts of tetrahydrofuran, 0.11 parts of piperidine, and 0.11 parts of n-butyllithium, and 20 parts of 1,3-butadiene was added to the reaction vessel at a polymerization initiation temperature of 40°C to perform temperature rising polymerization. After the polymerization conversion rate reached 99% or more, 10 parts of styrene was added at a polymerization initiation temperature of 40°C to perform the temperature rising polymerization. After the polymerization conversion rate reached 99% or more, a reaction solution was cooled to 30°C, 70 parts of 1,3-butadiene was added to the reaction solution, and further temperature rising polymerization was performed. After the polymerization conversion rate reached 99% or more, 0.07 parts of tetrachlorosilane was added, and further temperature rising polymerization was performed. The obtained polymer was a block copolymer having a polymer block A containing a structural unit derived from 1,3-butadiene and having a vinyl bond content of 73 mol%, a polymer block B containing a structural unit derived from styrene, and a polymer block A' containing a structural unit derived from 1,3-butadiene and having a vinyl bond content of 71 mol%. In the block copolymer, the 1st peak weight average molecular weight was 110,000, the total weight average molecular weight was 380,000, and the coupling rate was 95%.

Thereafter, 0.04 parts of diethylaluminum chloride and 0.10 parts of bis(cyclopentadienyl) titanium furyloxychloride were added to the reaction vessel, and the mixture was stirred. The hydrogenation reaction was started at a hydrogen gas supply pressure of 0.7 MPa-Gauge and a reaction temperature of 80°C. After 3.0 hours, the reaction solution was taken out from the reaction vessel at 60°C and a normal pressure. Next, 0.2 part of 2,6-di-tert-butyl-p-cresol was added to the obtained polymer solution, and the mixture was stirred and introduced into water to remove the solvent by steam distillation, followed by drying with a hot roll whose temperature was adjusted to 110°C, thereby obtaining a polymer (A-3) in which the hydrogenation rate of the conjugated diene portion was 98% and the MFR was 1.3 g/10 min. Various physical properties of the obtained polymer (A-3) are shown in Table 1.

[Example 4]: Production of Polymer (A-4)

A nitrogen-substituted reaction vessel was charged with 550 parts of degassed and dehydrated cyclohexane, 14 parts of tetrahydrofuran, 0.08 parts of piperidine, and 0.08 parts of n-butyllithium, and 20 parts of 1,3-butadiene was added to the reaction vessel at a polymerization initiation temperature of 40°C to perform temperature rising polymerization. After the polymerization conversion rate reached 99% or more, 10 parts of styrene was added at a polymerization initiation temperature of 40°C to perform the temperature rising polymerization. After the polymerization conversion rate reached 99% or more, a reaction solution was cooled to 30°C, 70 parts of 1,3-butadiene was added to the reaction solution, and further temperature rising polymerization was performed. After the polymerization conversion rate reached 99% or more, 0.03 parts of tetrachlorosilane was added, and further temperature rising polymerization was performed. The obtained polymer was a block copolymer having a polymer block A containing a structural unit derived from 1,3-butadiene and having a vinyl bond content of 70 mol%, a polymer block B containing a structural unit derived from styrene, and a polymer block A' containing a structural unit derived from 1,3-butadiene and having a vinyl bond content of 72 mol%. In the block copolymer, the 1st peak weight average molecular weight was 160,000, the total weight average molecular weight was 460,000, and the coupling rate was 73%.

Thereafter, 0.04 parts of diethylaluminum chloride and 0.10 parts of bis(cyclopentadienyl) titanium furyloxychloride were added to the reaction vessel, and the mixture was stirred. The hydrogenation reaction was started at a hydrogen gas supply pressure of 0.7 MPa-Gauge and a reaction temperature of 80°C. After 3.0 hours, the reaction solution was taken out from the reaction vessel at 60°C and a normal pressure. Next, 0.2 part of 2,6-di-tert-butyl-p-cresol was added to the obtained polymer solution, and the mixture was stirred and introduced into water to remove the solvent by steam distillation, followed by drying with a hot roll whose temperature was adjusted to 110°C, thereby obtaining a polymer (A-4) in which the hydrogenation rate of the conjugated diene portion was 98% and the MFR was 0.7 g/10 min. Various physical properties of the obtained polymer (A-4) are shown in Table 1.

[Example 5]: Production of Polymer (A-5)

A nitrogen-substituted reaction vessel was charged with 550 parts of degassed and dehydrated cyclohexane, 14 parts of tetrahydrofuran, 0.25 parts of N-(tert-butyldimethylsilyl) piperazine, and 0.11 parts of n-butyllithium, and 20 parts of 1,3-butadiene was added to the reaction vessel at a polymerization initiation temperature of 40°C to perform temperature rising polymerization. After the polymerization conversion rate reached 99% or more, 10 parts of styrene was added at a polymerization initiation temperature of 40°C to perform the temperature rising polymerization. After the polymerization conversion rate reached 99% or more, a reaction solution was cooled to 30°C, 70 parts of 1,3-butadiene was added to the reaction solution, and further temperature rising polymerization was performed. After the polymerization conversion rate reached 99% or more, 0.05 parts of tetrachlorosilane was added, and further temperature rising polymerization was performed. The obtained polymer was a block copolymer having a polymer block A containing a structural unit derived from 1,3-butadiene and having a vinyl bond content of 70 mol%, a polymer block B containing a structural unit derived from styrene, and a polymer block A' containing a structural unit derived from 1,3-butadiene and having a vinyl bond content of 72 mol%. In the block copolymer, the 1st peak weight average molecular weight was 110,000, the total weight average molecular weight was 340,000, and the coupling rate was 75%.

Thereafter, 0.04 parts of diethylaluminum chloride and 0.10 parts of bis(cyclopentadienyl) titanium furyloxychloride were added to the reaction vessel, and the mixture was stirred. The hydrogenation reaction was started at a hydrogen gas supply pressure of 0.7 MPa-Gauge and a reaction temperature of 80°C. After 3.0 hours, the reaction solution was taken out from the reaction vessel at 60°C and a normal pressure. Next, 0.2 part of 2,6-di-tert-butyl-p-cresol was added to the obtained polymer solution, and the mixture was stirred and introduced into water to remove the solvent by steam distillation, followed by drying with a hot roll whose temperature was adjusted to 110°C, thereby obtaining a polymer (A-5) in which the hydrogenation rate of the conjugated diene portion was 98% and the MFR was 2.7 g/10 min. Various physical properties of the obtained polymer (A-5) are shown in Table 1.

[Example 6]: Production Example of Polymer (A-6)

A nitrogen-substituted reaction vessel was charged with 550 parts of degassed and dehydrated cyclohexane, 14 parts of tetrahydrofuran, 0.08 parts of piperidine, and 0.08 parts of n-butyllithium, and 20 parts of 1,3-butadiene was added to the reaction vessel at a polymerization initiation temperature of 40°C to perform temperature rising polymerization. After the polymerization conversion rate reached 99% or more, 10 parts of styrene was added at a polymerization initiation temperature of 40°C to perform the temperature rising polymerization. After the polymerization conversion rate reached 99% or more, a reaction solution was cooled to 30°C, 70 parts of 1,3-butadiene was added to the reaction solution, and further temperature rising polymerization was performed. After the polymerization conversion rate reached 99% or more, 0.05 parts of tetrachlorosilane was added, and further temperature rising polymerization was performed. The obtained polymer was a block copolymer having a polymer block A containing a structural unit derived from 1,3-butadiene and having a vinyl bond content of 70 mol%, a polymer block B containing a structural unit derived from styrene, and a polymer block A' containing a structural unit derived from 1,3-butadiene and having a vinyl bond content of 70 mol%. In the block copolymer, the 1st peak weight average molecular weight was 160,000, the total weight average molecular weight was 320,000, and the coupling rate was 35%.

Thereafter, 0.04 parts of diethylaluminum chloride and 0.10 parts of bis(cyclopentadienyl) titanium furyloxychloride were added to the reaction vessel, and the mixture was stirred. The hydrogenation reaction was started at a hydrogen gas supply pressure of 0.7 MPa-Gauge and a reaction temperature of 80°C. After 3.0 hours, the reaction solution was taken out from the reaction vessel at 60°C and a normal pressure. Next, 0.2 part of 2,6-di-tert-butyl-p-cresol was added to the obtained polymer solution, and the mixture was stirred and introduced into water to remove the solvent by steam distillation, followed by drying with a hot roll whose temperature was adjusted to 110°C, thereby obtaining a polymer (A-6) in which the hydrogenation rate of the conjugated diene portion was 98% and the MFR was 2.7 g/10 min. Various physical properties of the obtained polymer (A-6) are shown in Table 1.

[Example 7]: Production of Polymer (A-7)

A polymer (A-7) having a hydrogenation rate of 83% and an MFR of 5.2 g/10 min in the conjugated diene portion was obtained by the same production method as that of the polymer (A-1) except that the amount of hydrogen supplied in the hydrogenation reaction was reduced. Various physical properties of the obtained polymer (A-7) are shown in Table 1.

[Example 8]: Production of Polymer (A-8)

A nitrogen-substituted reaction vessel was charged with 550 parts of degassed and dehydrated cyclohexane, 14 parts of tetrahydrofuran, and 0.12 parts of n-butyllithium, and 20 parts of 1,3-butadiene was added to the reaction vessel at a polymerization initiation temperature of 40°C to perform temperature rising polymerization. After the polymerization conversion rate reached 99% or more, 10 parts of styrene was added at a polymerization initiation temperature of 40°C to perform the temperature rising polymerization. After the polymerization conversion rate reached 99% or more, a reaction solution was cooled to 30°C, 70 parts of 1,3-butadiene was added to the reaction solution, and further temperature rising polymerization was performed. After the polymerization conversion rate reached 99% or more, 0.16 parts of 1,1'-(1,4-phenylene)bis(N-(3-(triethoxysilyl)propyl)methaneimine) was added, and further temperature rising polymerization was performed. The obtained polymer was a block copolymer having a polymer block A containing a structural unit derived from 1,3-butadiene and having a vinyl bond content of 70 mol%, a polymer block B containing a structural unit derived from styrene, and a polymer block A' containing a structural unit derived from 1,3-butadiene and having a vinyl bond content of 70 mol%. In the block copolymer, the 1st peak weight average molecular weight was 100,000, the total weight average molecular weight was 290,000, and the coupling rate was 70%.

Thereafter, 0.04 parts of diethylaluminum chloride and 0.10 parts of bis(cyclopentadienyl) titanium furyloxychloride were added to the reaction vessel, and the mixture was stirred. The hydrogenation reaction was started at a hydrogen gas supply pressure of 0.7 MPa-Gauge and a reaction temperature of 80°C. After 3.0 hours, the reaction solution was taken out from the reaction vessel at 60°C and a normal pressure. Next, 0.2 part of 2,6-di-tert-butyl-p-cresol was added to the obtained polymer solution, and the mixture was stirred and introduced into water to remove the solvent by steam distillation, followed by drying with a hot roll whose temperature was adjusted to 110°C, thereby obtaining a polymer (A-8) in which the hydrogenation rate of the conjugated diene portion was 97% and the MFR was 3.6 g/10 min. Various physical properties of the obtained polymer (A-8) are shown in Table 1.

[Example 9]: Production of Polymer (A-9)

A nitrogen-substituted reaction vessel was charged with 550 parts of degassed and dehydrated cyclohexane, 14 parts of tetrahydrofuran, 0.12 parts of piperidine, and 0.11 parts of n-butyllithium, and 20 parts of 1,3-butadiene was added to the reaction vessel at a polymerization initiation temperature of 40°C to perform temperature rising polymerization. After the polymerization conversion rate reached 99% or more, 10 parts of styrene was added at a polymerization initiation temperature of 40°C to perform the temperature rising polymerization. After the polymerization conversion rate reached 99% or more, a reaction solution was cooled to 30°C, 70 parts of 1,3-butadiene was added to the reaction solution, and further temperature rising polymerization was performed. After the polymerization conversion rate reached 99% or more, 0.16 parts of 1,1'-(1,4-phenylene)bis(N-(3-(triethoxysilyl)propyl)methaneimine) was added, and further temperature rising polymerization was performed. The obtained polymer was a block copolymer having a polymer block A containing a structural unit derived from 1,3-butadiene and having a vinyl bond content of 70 mol%, a polymer block B containing a structural unit derived from styrene, and a polymer block A' containing a structural unit derived from 1,3-butadiene and having a vinyl bond content of 70 mol%. In the block copolymer, the 1st peak weight average molecular weight was 100,000, the total weight average molecular weight was 340,000, and the coupling rate was 77%.

Thereafter, 0.04 parts of diethylaluminum chloride and 0.10 parts of bis(cyclopentadienyl) titanium furyloxychloride were added to the reaction vessel, and the mixture was stirred. The hydrogenation reaction was started at a hydrogen gas supply pressure of 0.7 MPa-Gauge and a reaction temperature of 80°C. After 3.0 hours, the reaction solution was taken out from the reaction vessel at 60°C and a normal pressure. Next, 0.2 part of 2,6-di-tert-butyl-p-cresol was added to the obtained polymer solution, and the mixture was stirred and introduced into water to remove the solvent by steam distillation, followed by drying with a hot roll whose temperature was adjusted to 110°C, thereby obtaining a polymer (A-9) in which the hydrogenation rate of the conjugated diene portion was 96% and the MFR was 4.5 g/10 min. Various physical properties of the obtained polymers (A-9) are shown in Table 1.

[Example 10]: Production of Polymer (A-10)

A nitrogen-substituted reaction vessel was charged with 550 parts of degassed and dehydrated cyclohexane, 4.1 parts of tetrahydrofuran, 0.11 parts of piperidine, and 0.11 parts of n-butyllithium, and 20 parts of 1,3-butadiene was added

to the reaction vessel at a polymerization initiation temperature of 40°C to perform temperature rising polymerization. After the polymerization conversion rate reached 99% or more, 10 parts of styrene was added at a polymerization initiation temperature of 40°C to perform the temperature rising polymerization. After the polymerization conversion rate reached 99% or more, a reaction solution was cooled to 30°C, 70 parts of 1,3-butadiene was added to the reaction solution, and further temperature rising polymerization was performed. After the polymerization conversion rate reached 99% or more, 0.05 parts of tetrachlorosilane was added, and further temperature rising polymerization was performed. The obtained polymer was a block copolymer having a polymer block A containing a structural unit derived from 1,3-butadiene and having a vinyl bond content of 52 mol%, a polymer block B containing a structural unit derived from styrene, and a polymer block A' containing a structural unit derived from 1,3-butadiene and having a vinyl bond content of 54 mol%. In the block copolymer, the 1st peak weight average molecular weight was 110,000, the total weight average molecular weight was 340,000, and the coupling rate was 75%.

Thereafter, 0.04 parts of diethylaluminum chloride and 0.10 parts of bis(cyclopentadienyl) titanium furyloxychloride were added to the reaction vessel, and the mixture was stirred. The hydrogenation reaction was started at a hydrogen gas supply pressure of 0.7 MPa-Gauge and a reaction temperature of 80°C. After 3.0 hours, the reaction solution was taken out from the reaction vessel at 60°C and a normal pressure. Next, 0.2 part of 2,6-di-tert-butyl-p-cresol was added to the obtained polymer solution, and the mixture was stirred and introduced into water to remove the solvent by steam distillation, followed by drying with a hot roll whose temperature was adjusted to 110°C, thereby obtaining a polymer (A-10) in which the hydrogenation rate of the conjugated diene portion was 98% and the MFR was 1.3 g/10 min. Various physical properties of the obtained polymers (A-10) are shown in Table 1.

[Example 11]: Production of Polymer (A-11)

A nitrogen-substituted reaction vessel was charged with 550 parts of degassed and dehydrated cyclohexane, 14 parts of tetrahydrofuran, 0.11 parts of piperidine, and 0.11 parts of n-butyllithium, and 20 parts of 1,3-butadiene was added to the reaction vessel at a polymerization initiation temperature of 40°C to perform temperature rising polymerization. After the polymerization conversion rate reached 99% or more, 10 parts of styrene was added at a polymerization initiation temperature of 40°C to perform the temperature rising polymerization. After the polymerization conversion rate reached 99% or more, the reaction solution was cooled to 30°C, and 50 parts of 1,3-butadiene and 20 parts of styrene were added to the reaction solution, and further temperature rising polymerization was performed. After the polymerization conversion rate reached 99% or more, 0.05 parts of tetrachlorosilane was added, and further temperature rising polymerization was performed. The obtained polymer was a block copolymer having a polymer block A containing a structural unit derived from 1,3-butadiene and having a vinyl bond content of 70 mol%, a polymer block B containing a structural unit derived from styrene, and a polymer block C containing a structural unit derived from 1,3-butadiene and a structural unit derived from styrene and having a vinyl bond content of 70 mol%. In the block copolymer, the 1st peak weight average molecular weight was 110,000, the total weight average molecular weight was 340,000, and the coupling rate was 75%.

Thereafter, 0.04 parts of diethylaluminum chloride and 0.10 parts of bis(cyclopentadienyl) titanium furyloxychloride were added to the reaction vessel, and the mixture was stirred. The hydrogenation reaction was started at a hydrogen gas supply pressure of 0.7 MPa-Gauge and a reaction temperature of 80°C. After 3.0 hours, the reaction solution was taken out from the reaction vessel at 60°C and a normal pressure. Next, 0.2 part of 2,6-di-tert-butyl-p-cresol was added to the obtained polymer solution, and the mixture was stirred and introduced into water to remove the solvent by steam distillation, followed by drying with a hot roll whose temperature was adjusted to 110°C, thereby obtaining a polymer (A-11) in which the hydrogenation rate of the conjugated diene portion was 98% and the MFR was 4.5 g/10 min. Various physical properties of the obtained polymers (A-11) are shown in Table 2.

[Example 12]: Production of Polymer (A-12)

A nitrogen-substituted reaction vessel was charged with 550 parts of degassed and dehydrated cyclohexane, 14 parts of tetrahydrofuran, 0.11 parts of piperidine, and 0.11 parts of n-butyllithium, and 20 parts of 1,3-butadiene was added to the reaction vessel at a polymerization initiation temperature of 40°C to perform temperature rising polymerization. After the polymerization conversion rate reached 99% or more, 20 parts of styrene was added at a polymerization initiation temperature of 40°C to perform the temperature rising polymerization. After the polymerization conversion rate reached 99% or more, a reaction solution was cooled to 34°C, 60 parts of 1,3-butadiene was added to the reaction solution, and further temperature rising polymerization was performed. After the polymerization conversion rate reached 99% or more, 0.05 parts of tetrachlorosilane was added, and further temperature rising polymerization was performed. The obtained polymer was a block copolymer having a polymer block A containing a structural unit derived from 1,3-butadiene and having a vinyl bond content of 70 mol%, a polymer block B containing a structural unit derived from styrene, and a polymer block A' containing a structural unit derived from 1,3-butadiene and having a vinyl bond content of 70 mol%. In the block copolymer, the 1st peak weight average molecular weight was 110,000, the total weight average molecular weight was

340,000, and the coupling rate was 75%.

Thereafter, 0.04 parts of diethylaluminum chloride and 0.10 parts of bis(cyclopentadienyl) titanium furyloxychloride were added to the reaction vessel, and the mixture was stirred. The hydrogenation reaction was started at a hydrogen gas supply pressure of 0.7 MPa-Gauge and a reaction temperature of 80°C. After 3.0 hours, the reaction solution was taken out from the reaction vessel at 60°C and a normal pressure. Next, 0.2 part of 2,6-di-tert-butyl-p-cresol was added to the obtained polymer solution, and the mixture was stirred and introduced into water to remove the solvent by steam distillation, followed by drying with a hot roll whose temperature was adjusted to 110°C, thereby obtaining a polymer (A-12) in which the hydrogenation rate of the conjugated diene portion was 98% and the MFR was 1.3 g/10 min. Various physical properties of the obtained polymers (A-12) are shown in Table 2.

[Example 13]: Production of Polymer (A-13)

A nitrogen-substituted reaction vessel was charged with 550 parts of degassed and dehydrated cyclohexane, 14 parts of tetrahydrofuran, 0.11 parts of piperidine, and 0.11 parts of n-butyllithium, and 5 parts of 1,3-butadiene was added to the reaction vessel at a polymerization initiation temperature of 40°C to perform temperature rising polymerization. After the polymerization conversion rate reached 99% or more, 10 parts of styrene was added at a polymerization initiation temperature of 40°C to perform the temperature rising polymerization. After the polymerization conversion rate reached 99% or more, a reaction solution was cooled to 20°C, 85 parts of 1,3-butadiene was added to the reaction solution, and further temperature rising polymerization was performed. After the polymerization conversion rate reached 99% or more, 0.05 parts of tetrachlorosilane was added, and further temperature rising polymerization was performed. The obtained polymer was a block copolymer having a polymer block A containing a structural unit derived from 1,3-butadiene and having a vinyl bond content of 70 mol%, a polymer block B containing a structural unit derived from styrene, and a polymer block A' containing a structural unit derived from 1,3-butadiene and having a vinyl bond content of 70 mol%. In the block copolymer, the 1st peak weight average molecular weight was 110,000, the total weight average molecular weight was 340,000, and the coupling rate was 75%.

Thereafter, 0.04 parts of diethylaluminum chloride and 0.10 parts of bis(cyclopentadienyl) titanium furyloxychloride were added to the reaction vessel, and the mixture was stirred. The hydrogenation reaction was started at a hydrogen gas supply pressure of 0.7 MPa-Gauge and a reaction temperature of 80°C. After 3.0 hours, the reaction solution was taken out from the reaction vessel at 60°C and a normal pressure. Next, 0.2 part of 2,6-di-tert-butyl-p-cresol was added to the obtained polymer solution, and the mixture was stirred and introduced into water to remove the solvent by steam distillation, followed by drying with a hot roll whose temperature was adjusted to 110°C, thereby obtaining a polymer (A-13) in which the hydrogenation rate of the conjugated diene portion was 98% and the MFR was 2.4 g/10 min. Various physical properties of the obtained polymers (A-13) are shown in Table 2.

[Example 14]: Production of Polymer (A-14)

A nitrogen-substituted reaction vessel was charged with 550 parts of degassed and dehydrated cyclohexane, 14 parts of tetrahydrofuran, 0.11 parts of piperidine, and 0.11 parts of n-butyllithium, and 10 parts of styrene was added to the reaction vessel at a polymerization initiation temperature of 40°C to perform temperature rising polymerization. After the polymerization conversion rate reached 99% or more, a reaction solution was cooled to 17°C, 90 parts of 1,3-butadiene was added to the reaction solution, and further temperature rising polymerization was performed. After the polymerization conversion rate reached 99% or more, 0.05 parts of tetrachlorosilane was added, and further temperature rising polymerization was performed. The obtained polymer was a block copolymer having a polymer block B containing a structural unit derived from styrene and a polymer block A containing a structural unit derived from 1,3-butadiene and having a vinyl bond content of 70 mol%. In the block copolymer, the 1st peak weight average molecular weight was 110,000, the total weight average molecular weight was 340,000, and the coupling rate was 75%.

Thereafter, 0.04 parts of diethylaluminum chloride and 0.10 parts of bis(cyclopentadienyl) titanium furyloxychloride were added to the reaction vessel, and the mixture was stirred. The hydrogenation reaction was started at a hydrogen gas supply pressure of 0.7 MPa-Gauge and a reaction temperature of 80°C. After 3.0 hours, the reaction solution was taken out from the reaction vessel at 60°C and a normal pressure. Next, 0.2 part of 2,6-di-tert-butyl-p-cresol was added to the obtained polymer solution, and the mixture was stirred and introduced into water to remove the solvent by steam distillation, followed by drying with a hot roll whose temperature was adjusted to 110°C, thereby obtaining a polymer (A-14) in which the hydrogenation rate of the conjugated diene portion was 98% and the MFR was 2.0 g/10 min. Various physical properties of the obtained polymers (A-14) are shown in Table 2.

[Comparative Example 1]: Production of Polymer (A-15)

A nitrogen-substituted reaction vessel was charged with 550 parts of degassed and dehydrated cyclohexane, 14

parts of tetrahydrofuran, and 0.11 parts of n-butyllithium, and 20 parts of 1,3-butadiene was added to the reaction vessel at a polymerization initiation temperature of 40°C to perform temperature rising polymerization. After the polymerization conversion rate reached 99% or more, 10 parts of styrene was added at a polymerization initiation temperature of 40°C to perform the temperature rising polymerization. After the polymerization conversion rate reached 99% or more, a reaction solution was cooled to 30°C, 70 parts of 1,3-butadiene was added to the reaction solution, and further temperature rising polymerization was performed. After the polymerization conversion rate reached 99% or more, 0.05 parts of tetrachlorosilane was added, and further temperature rising polymerization was performed. The obtained polymer was a block copolymer having a polymer block A containing a structural unit derived from 1,3-butadiene and having a vinyl bond content of 70 mol%, a polymer block B containing a structural unit derived from styrene, and a polymer block A' containing a structural unit derived from 1,3-butadiene and having a vinyl bond content of 70 mol%. In the block copolymer, the 1st peak weight average molecular weight was 120,000, the total weight average molecular weight was 350,000, and the coupling rate was 75%.

Thereafter, 0.04 parts of diethylaluminum chloride and 0.10 parts of bis(cyclopentadienyl) titanium furyloxychloride were added to the reaction vessel, and the mixture was stirred. The hydrogenation reaction was started at a hydrogen gas supply pressure of 0.7 MPa-Gauge and a reaction temperature of 80°C. After 3.0 hours, the reaction solution was taken out from the reaction vessel at 60°C and a normal pressure. Next, 0.2 part of 2,6-di-tert-butyl-p-cresol was added to the obtained polymer solution, and the mixture was stirred and introduced into water to remove the solvent by steam distillation, followed by drying with a hot roll whose temperature was adjusted to 110°C, thereby obtaining a polymer (A-15) in which the hydrogenation rate of the conjugated diene portion was 98% and the MFR was 3.1 g/10 min. Various physical properties of the obtained polymers (A-15) are shown in Table 2.

[Comparative Example 2]: Production of Polymer (A-16)

A nitrogen-substituted reaction vessel was charged with 800 parts of degassed and dehydrated cyclohexane, 0.03 parts of tetrahydrofuran, 0.14 parts of piperidine, and 0.14 parts of n-butyllithium, and 30 parts of 1,3-butadiene was added to the reaction vessel at a polymerization initiation temperature of 70°C to perform temperature rising polymerization. After a polymerization conversion rate reached 99% or more, a reaction solution was cooled to 20°C, 70 parts of 1,3-butadiene and 16 parts of tetrahydrofuran were added to the reaction solution, and further temperature rising polymerization was performed. After the polymerization conversion rate reached 99% or more, 0.06 parts of tetrachlorosilane was added, and further temperature rising polymerization was performed. The obtained polymer was a block copolymer having a polymer block A containing a structural unit derived from 1,3-butadiene and having a vinyl bond content of 15 mol%, and a polymer block A' containing a structural unit derived from 1,3-butadiene and having a vinyl bond content of 75 mol%. In the block copolymer, the 1st peak weight average molecular weight was 100,000, the total weight average molecular weight was 300,000, and the coupling rate was 75%.

Thereafter, 0.05 parts of diethylaluminum chloride and 0.11 parts of bis(cyclopentadienyl) titanium furyloxychloride were added to the reaction vessel, and the mixture was stirred. The hydrogenation reaction was started at a hydrogen gas supply pressure of 0.7 MPa-Gauge and a reaction temperature of 80°C. After 3.0 hours, the reaction solution was taken out from the reaction vessel at 60°C and a normal pressure. Next, 0.2 part of 2,6-di-tert-butyl-p-cresol was added to the obtained polymer solution, and the mixture was stirred and introduced into water to remove the solvent by steam distillation, followed by drying with a hot roll whose temperature was adjusted to 110°C, thereby obtaining a polymer (A-16) in which the hydrogenation rate of the conjugated diene portion was 98% and the MFR was 4.2 g/10 min. Various physical properties of the obtained polymers (A-16) are shown in Table 2.

[Comparative Example 3]: Production of Polymer (A-17)

A nitrogen-substituted reaction vessel was charged with 550 parts of degassed and dehydrated cyclohexane, 14 parts of tetrahydrofuran, 0.05 parts of piperidine, and 0.06 parts of n-butyllithium, and 20 parts of 1,3-butadiene was added to the reaction vessel at a polymerization initiation temperature of 40°C to perform temperature rising polymerization. After the polymerization conversion rate reached 99% or more, 10 parts of styrene was added at a polymerization initiation temperature of 40°C to perform the temperature rising polymerization. After the polymerization conversion rate reached 99% or more, a reaction solution was cooled to 30°C, 70 parts of 1,3-butadiene was added to the reaction solution, and further temperature rising polymerization was performed. After the polymerization conversion rate reached 99% or more, 0.002 parts of tetrachlorosilane was added, and further temperature rising polymerization was performed. The obtained polymer was a block copolymer having a polymer block A containing a structural unit derived from 1,3-butadiene and having a vinyl bond content of 70 mol%, a polymer block B containing a structural unit derived from styrene, and a polymer block A' containing a structural unit derived from 1,3-butadiene and having a vinyl bond content of 70 mol%. In the block copolymer, the 1st peak weight average molecular weight was 220,000, the total weight average molecular weight was 270,000, and the coupling rate was 8%.

Thereafter, 0.04 parts of diethylaluminum chloride and 0.10 parts of bis(cyclopentadienyl) titanium furyloxychloride were added to the reaction vessel, and the mixture was stirred. The hydrogenation reaction was started at a hydrogen gas supply pressure of 0.7 MPa-Gauge and a reaction temperature of 80°C. After 3.0 hours, the reaction solution was taken out from the reaction vessel at 60°C and a normal pressure. Next, 0.2 part of 2,6-di-tert-butyl-p-cresol was added to the obtained polymer solution, and the mixture was stirred and introduced into water to remove the solvent by steam distillation, followed by drying with a hot roll whose temperature was adjusted to 110°C, thereby obtaining a polymer (A-17) in which the hydrogenation rate of the conjugated diene portion was 98% and the MFR was 4.8 g/10 min. Various physical properties of the obtained polymers (A-17) are shown in Table 2.

[Comparative Example 4]: Production of Polymer (A-18)

A polymer (A-18) having a hydrogenation rate of 60% and an MFR of 7.6 g/10 min in the conjugated diene portion was obtained by the same production method as that of the polymer (A-1) except that the amount of hydrogen supplied in the hydrogenation reaction was reduced. Various physical properties of the obtained polymers (A-18) are shown in Table 2.

[Comparative Example 5]: Production of Polymer (A-19)

A nitrogen-substituted reaction vessel was charged with 550 parts of degassed and dehydrated cyclohexane, 14 parts of tetrahydrofuran, 0.06 parts of piperidine, and 0.06 parts of n-butyllithium, and 20 parts of 1,3-butadiene was added to the reaction vessel at a polymerization initiation temperature of 40°C to perform temperature rising polymerization. After the polymerization conversion rate reached 99% or more, 10 parts of styrene was added at a polymerization initiation temperature of 40°C to perform the temperature rising polymerization. After the polymerization conversion rate reached 99% or more, a reaction solution was cooled to 30°C, 70 parts of 1,3-butadiene was added to the reaction solution, and further temperature rising polymerization was performed. After the polymerization conversion rate reached 99% or more, 0.04 parts of methyldichlorosilane was added, and further temperature rising polymerization was performed. The obtained polymer was a block copolymer having a polymer block A containing a structural unit derived from 1,3-butadiene and having a vinyl bond content of 70 mol%, a polymer block B containing a structural unit derived from styrene, and a polymer block A' containing a structural unit derived from 1,3-butadiene and having a vinyl bond content of 70 mol%. In the block copolymer, the 1st peak weight average molecular weight was 220,000, the total weight average molecular weight was 300,000, and the coupling rate was 75%.

Thereafter, 0.04 parts of diethylaluminum chloride and 0.10 parts of bis(cyclopentadienyl) titanium furyloxychloride were added to the reaction vessel, and the mixture was stirred. The hydrogenation reaction was started at a hydrogen gas supply pressure of 0.7 MPa-Gauge and a reaction temperature of 80°C. After 3.0 hours, the reaction solution was taken out from the reaction vessel at 60°C and a normal pressure. Next, 0.2 part of 2,6-di-tert-butyl-p-cresol was added to the obtained polymer solution, and the mixture was stirred and introduced into water to remove the solvent by steam distillation, followed by drying with a hot roll whose temperature was adjusted to 110°C, thereby obtaining a polymer (A-19) in which the hydrogenation rate of the conjugated diene portion was 98% and the MFR was 1.2 g/10 min. Various physical properties of the obtained polymers (A-19) are shown in Table 2.

[Comparative Example 6]: Production of Polymer (A-20)

A nitrogen-substituted reaction vessel was charged with 550 parts of degassed and dehydrated cyclohexane, 14 parts of tetrahydrofuran, and 0.06 parts of n-butyllithium, and 20 parts of 1,3-butadiene was added to the reaction vessel at a polymerization initiation temperature of 40°C to perform temperature rising polymerization. After the polymerization conversion rate reached 99% or more, 12 parts of styrene was added at a polymerization initiation temperature of 40°C to perform the temperature rising polymerization. After the polymerization conversion rate reached 99% or more, a reaction solution was cooled to 30°C, 68 parts of 1,3-butadiene was added to the reaction solution, and further temperature rising polymerization was performed. After the polymerization conversion rate reached 99% or more, 0.03 parts of tetrachlorosilane was added, and further temperature rising polymerization was performed. The obtained polymer was a block copolymer having a polymer block A containing a structural unit derived from 1,3-butadiene and having a vinyl bond content of 70 mol%, a polymer block B containing a structural unit derived from styrene, and a polymer block A' containing a structural unit derived from 1,3-butadiene and having a vinyl bond content of 70 mol%. In the block copolymer, the 1st peak weight average molecular weight was 210,000, the total weight average molecular weight was 580,000, and the coupling rate was 75%.

Thereafter, 0.04 parts of diethylaluminum chloride and 0.10 parts of bis(cyclopentadienyl) titanium furyloxychloride were added to the reaction vessel, and the mixture was stirred. The hydrogenation reaction was started at a hydrogen gas supply pressure of 0.7 MPa-Gauge and a reaction temperature of 80°C. After 3.0 hours, the reaction solution was taken out from the reaction vessel at 60°C and a normal pressure. Next, 0.2 part of 2,6-di-tert-butyl-p-cresol was

added to the obtained polymer solution, and the mixture was stirred and introduced into water to remove the solvent by steam distillation, followed by drying with a hot roll whose temperature was adjusted to 110°C, thereby obtaining a polymer (A-20) in which the hydrogenation rate of the conjugated diene portion was 98% and the MFR was 0.1 g/10 min. Various physical properties of the obtained polymers (A-20) are shown in Table 2.

3. Production of Adhesive Film and Evaluation of Adhesive Performance

Polyethylene (YF30, manufactured by Mitsubishi Chemical Corporation) was used as the substrate material layer, and the polymer (A-1) to the polymer (A-20) produced above were used as the adhesive layer, and the substrate material layer and the adhesive layer were co-extruded and molded so that a thickness of the substrate material layer was 100 μm and a thickness of the adhesive layer was 10 μm by a twin-screw co-extrusion device equipped with a T die of a feed block type, thereby producing the adhesive films (Examples 1 to 14 and Comparative Examples 1 to 6). Molding conditions (cylinder temperature and die temperature) at this time were as follows: an extrusion temperature for the adhesive layer: 150 to 220°C (hopper side to die side (°C)), an extrusion temperature for the substrate material layer: 150 to 220°C (hopper side to die side (°C)), and a die temperature: 220°C. When the adhesive film was produced, 0.2 parts by mass of trade name "TINUVIN 326" manufactured by Ciba Specialty Chemicals and 0.2 parts by mass of trade name "Adekastab LA52" manufactured by Asahi Denka Corporation were blended as stabilizers in the block copolymer with respect to 100 parts by mass of the block copolymer. The obtained adhesive film was evaluated for the following various properties. The evaluation method is as follows.

[Extrusion moldability]

The adhesive film obtained by the co-extrusion and molding was visually evaluated according to four evaluation criteria of A to D shown below.

(Evaluation Criteria)

A: No surface roughness and no thickness unevenness were observed.
B: No surface roughness was observed, and thickness unevenness was observed.
C: Melt fracture was observed in a part of the surface.
D: Melt fracture was observed on the entire surface, and moldability was poor.

[Peel Strength]

Each of the adhesive films in Examples and Comparative Examples was attached to a SUS plate (SUS mirror surface plate) whose surface is polished so as to have a surface roughness of 2.0 to 5.0 μm at a pressure of $5.9 \times 10^5$ Pa and a speed of 30 mm/min using a table laminator in an environment of a room temperature of 23°C and a relative humidity of 50%. After each produced film was allowed to stand for 30 minutes in the environment at the room temperature of 23°C and the relative humidity of 50%, the 180-degree peel strength of each film (25 mm width) was measured at a rate of 300 mm/min in accordance with the method of JIS Z0237: 2009, and the strength of each film was defined as an initial peel strength. The peel strength was determined from the obtained initial peel strength in accordance with the following four determination criteria A to D.

A: 0.50 N/10 mm or more, and peel strength was extremely good.
B: 0.30 N/10 mm or more and less than 0.50 N/10 mm, and the peel strength was good.
C: 0.10 N/10 mm or more and less than 0.30 N/10 mm, and the peel strength was at an allowable level.
D: less than 0.10 N/10 mm, and the peel strength was poor.

[Low increase in adhesiveness]

Each of the adhesive films in Examples and Comparative Examples was attached to the surface of a plate similar to the SUS plate used in the peel strength evaluation of the above (1) using the table laminator in an environment of a room temperature of 23°C and a relative humidity of 50% at a pressure of $5.9 \times 10^5$ Pa and a speed of 30 mm/min. Subsequently, each produced film was allowed to stand at 60°C for 30 minutes or at 60°C for 1 week, and the 180-degree peel strength of each film (25 mm width) was measured at a rate of 300 mm/min in accordance with the method of JISZ0237. The measured 180-degree peel strength of each film after allowed to stand at 60°C for 30 minutes was defined as the initial peel strength,

and the measured 180-degree peel strength of each film after allowed to stand at 60°C for 1 week was defined as a peel strength over time. From the initial peel strength, a change ratio in peel strength over time (ratio of the increase in adhesiveness) was calculated by the following equation (a).

$$\text{Change ratio (ratio of increase in adhesiveness)} = \text{(peel strength over time/initial peel strength)} \quad (a)$$

From the obtained change ratio (ratio of increase in adhesiveness), the adhesiveness was determined to be advanced in accordance with the following four determination criteria from A to D.

A: The ratio of increase in adhesiveness was in a range of 1.2 or less, and the low increase in adhesiveness was extremely good.
B: The ratio of increase in adhesiveness was in the range of more than 1.2 and 1.6 or less, and the low increase in adhesiveness was good.
C: The ratio of increase in adhesiveness was in a range of more than 1.6 and 2.0, and the increase in adhesiveness was at an allowable level.
D: The ratio of increase in adhesiveness was more than 2.0, and the low increase in adhesiveness was poor.

[Expandability]

Each of the adhesive films in Examples and Comparative Examples was attached to a polypropylene film using a table laminator in an environment of a room temperature of 23°C and a relative humidity of 50% under conditions of a pressure of $5.9 \times 10^5$ Pa and a speed of 30 m/min. Thereafter, each produced film was allowed to stand at 23°C for 24 hours, and then the 180-degree peel strength of each film (25 mm width) was measured at a rate of 15 m/min in accordance with the method of JIS Z0237: 2009, and the strength of each film was defined as an expanding force. From the obtained expanding force, the expandability was determined based on the following four determination criteria from A to D.

A: less than 0.05 N/10 mm, and the expandability was extremely good.
B: 0.05 N/10 mm or more and less than 0.10 N/10 mm, and the expandability was good.
C: 0.10 N/10 mm or more and less than 0.20 N/10 mm, and the expandability was at an allowable level.
D: 0.20 N/10 mm or more, and there was concern about adverse effects on rewinding from a film roll, and the expandability was poor.

[Adhesive Residue]

In the evaluation of the above low increase in adhesiveness, the surface of the SUS plate after the evaluation of the peel strength over time was visually observed, and presence or absence of residue of the adhesive layer was confirmed. Based on the presence or absence of the residue, the adhesive residue was determined according to the following two determination criteria of A and B.

A: There was no residue, and the adhesive residue was good.
B: The residue was observed, a contamination property to a polar adherend was high, and the adhesive residue was poor.

[Table 1]

| | | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|
| Polymer | Polymer name | | A-1 | A-2 | A-3 | A-4 | A-5 | A-6 | A-7 | A-8 | A-9 | A-10 |
| | Block A | Monomer | BD | BD | BD | BD | BD | BD | BD | BD | BD | BD |
| | | Number of parts (parts by mass) | 20 | 20 | 20 | 20 | 20 | 20 | 20 | 20 | 20 | 20 |
| | | Vinyl bond content (mol%) | 70 | 71 | 73 | 70 | 70 | 70 | 70 | 70 | 70 | 52 |
| | Block B | Monomer | ST | ST | ST | ST | ST | ST | ST | ST | ST | ST |
| | | Number of parts (parts by mass) | 10 | 10 | 10 | 10 | 10 | 10 | 10 | 10 | 10 | 10 |
| | Block A or block C | Monomer | BD | BD | BD | BD | BD | BD | BD | BD | BD | BD |
| | | Number of parts (parts by mass) | 70 | 70 | 70 | 70 | 70 | 70 | 70 | 70 | 70 | 70 |
| | | Vinyl bond content (mol%) | 70 | 72 | 71 | 72 | 72 | 70 | 70 | 70 | 70 | 54 |
| | Initiation terminal modifying agent | | R-1 | R-1 | R-1 | R-1 | R-2 | R-1 | R-1 | None | R-1 | R-1 |
| | Coupling agent | | C-1 | C-1 | C-1 | C-1 | C-1 | C-1 | C-1 | C-3 | C-3 | C-1 |
| | 1st peak molecular weight ($x10^4$) | | 11 | 8 | 11 | 16 | 11 | 16 | 11 | 10 | 10 | 11 |
| | Total molecular weight ($x10^4$) | | 34 | 26 | 38 | 46 | 34 | 32 | 34 | 29 | 34 | 34 |
| | Coupling rate (%) | | 75 | 70 | 95 | 73 | 75 | 35 | 75 | 73 | 77 | 75 |
| | Hydrogenation rate (%) | | 98 | 98 | 98 | 98 | 98 | 98 | 83 | 97 | 96 | 98 |
| | MFR_230°C21N | | 3.0 | 16.2 | 1.3 | 0.7 | 2.7 | 4.2 | 5.2 | 3.6 | 4.5 | 1.3 |
| | Ratio of polymer (A1) (mass%) | | 73 | 67 | 93 | 71 | 72 | 32 | 73 | 71 | 74 | 72 |
| Evaluation result | Extrusion moldability | | B | A | C | C | B | A | C | B | B | C |
| | Peel strength | | B | B | B | B | B | C | B | A | A | C |
| | Low increase in adhesiveness | | B | C | A | A | B | C | C | B | A | B |
| | Expandability | | B | C | A | A | B | C | C | B | A | C |
| | Adhesive residue | | A | A | A | A | A | A | A | A | A | A |

[Table 2]

| | | | Example 11 | Example 12 | Example 13 | Example 14 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|
| Polymer | Polymer name | | A-11 | A-12 | A-13 | A-14 | A-15 | A-16 | A-17 | A-18 | A-19 | A-20 |
| | Block A | Monomer | BD | BD | BD | - | BD | BD | BD | BD | BD | BD |
| | | Number of parts (parts by mass) | 20 | 20 | 5 | - | 20 | 30 | 20 | 20 | 20 | 20 |
| | | Vinyl bond content (mol%) | 70 | 70 | 70 | - | 70 | 15 | 70 | 70 | 70 | 70 |
| | Block B | Monomer | ST | ST | ST | ST | ST | - | ST | ST | ST | ST |
| | | Number of parts (parts by mass) | 10 | 20 | 10 | 10 | 10 | - | 10 | 10 | 10 | 12 |
| | Block A or block C | Monomer | BD/ST | BD | BD | BD | BD | BD | BD | BD | BD | BD |
| | | Number of parts (parts by mass) | 50/20 | 60 | 85 | 90 | 70 | 70 | 70 | 70 | 70 | 68 |
| | | Vinyl bond content (mol%) | 70 | 70 | 70 | 70 | 70 | 75 | 70 | 70 | 70 | 70 |
| | Initiation terminal modifying agent | | R-1 | R-1 | R-1 | R-1 | None | R-1 | R-1 | R-1 | R-1 | None |
| | Coupling agent | | C-1 | C-1 | C-1 | C-1 | C-1 | C-1 | C-1 | C-1 | C-2 | C-1 |
| | 1st peak molecular weight (x$10^4$) | | 11 | 11 | 11 | 11 | 12 | 10 | 22 | 11 | 22 | 21 |
| | Total molecular weight (x$10^4$) | | 34 | 34 | 34 | 34 | 35 | 30 | 27 | 34 | 30 | 58 |
| | Coupling rate (%) | | 75 | 75 | 75 | 75 | 75 | 75 | 8 | 75 | 75 | 75 |

(continued)

| | | Example 11 | Example 12 | Example 13 | Example 14 | Comparative Example 1 | Comparative Example 2 | Comparative Example 3 | Comparative Example 4 | Comparative Example 5 | Comparative Example 6 |
|---|---|---|---|---|---|---|---|---|---|---|---|
| | Hydrogenation rate (%) | 98 | 98 | 98 | 98 | 98 | 98 | 98 | 60 | 98 | 98 |
| | MFR_230°C21N | 4.5 | 1.3 | 2.4 | 2.0 | 3.1 | 4.2 | 4.8 | 7.6 | 1.2 | 0.1 |
| | Ratio of polymer (A1) (mass%) | 73 | 72 | 73 | 73 | 73 | 72 | 7 | 73 | 73 | 73 |
| Evaluation result | Extrusion moldability | A | C | B | B | B | C | B | D | D | D |
| | Peel strength | B | C | C | C | D | D | D | B | D | D |
| | Low increase in adhesiveness | C | B | B | B | C | B | D | D | D | C |
| | Expandability | A | B | B | B | D | B | D | C | D | D |
| | Adhesive residue | A | A | A | A | A | A | B | B | A | A |

In Table 1 and Table 2, abbreviations of a monomer, an initiation terminal modifying agent, a coupling agent, and a post-modifying agent represent the following compounds. The number of parts of the monomer represents the charged amount (parts by mass).

·BD: 1,3-butadiene
·ST: styrene
·R-1: piperidine
·R-2: N-(tert-butyldimethylsilyl) piperazine
·C-1: tetrachlorosilane
·C-2: methyldichlorosilane
·C-3: 1,1'-(1,4-phenylene)bis(N-(3-(triethoxysilyl)propyl)methaneimine)

As shown in Table 1 and Table 2, it was found that the adhesive films of Examples 1 to 14 using the [A]-block copolymer exhibited extrusion moldability, adhesion strength (peel strength), low increase in adhesiveness, expandability, and adhesive residue characteristics in a well-balanced manner. On the other hand, in Comparative Examples 1 and 6 in which the initiation terminal modifying agent was not used at the time of polymerization, the adhesion strength and the expandability were evaluated as "D". The adhesive film of Comparative Example 3 in which the content of the polymer (A1) was small was further inferior in low increase in adhesiveness and adhesive residue characteristics, and the adhesive film of Comparative Example 5 in which a bifunctional coupling agent was used was also inferior in extrusion moldability and low increase in adhesiveness. In Comparative Example 2 having no styrene block, the adhesion strength and tackiness were evaluated as "D". The adhesive film of Comparative Example 4 using the block copolymer in which the hydrogenation rate was as low as 60% was inferior in the extrusion moldability, and was insufficient in the low increase in adhesiveness and the adhesive residue characteristics.

From the above results, it was revealed that the block copolymer in the present invention exhibits the molding processability, the adhesive performance, and the expandability in a well-balanced manner. Furthermore, it was confirmed that the block copolymer in the present invention is less likely to cause the increase in adhesiveness, and is less likely to leave the adhesive residue when peeled from the adherend.
Provided is a block copolymer capable of exhibiting molding processability, adhesive performance, and expandability in a balanced manner.

## Claims

**1.** A block copolymer comprising:

10 mass% or more of a polymer (A1) having a multi-branched structure having four or more polymer chains,
wherein the polymer chain includes a polymer block A containing 70 mass% or more of a structural unit derived from a conjugated diene compound, and a polymer block B containing 70 mass% or more of a structural unit derived from an aromatic vinyl compound,
wherein a functional group F containing at least one element selected from the group consisting of nitrogen, oxygen, and sulfur is contained at a part or all of the terminals of the four or more polymer chains, and
wherein the block polymer has a value $\alpha$ of 0.83 or more represented by the following equation (i), where p is defined as a component proportion (molar proportion) of a structural unit represented by the following formula (1), q is defined as a component proportion (molar proportion) of a structural unit represented by the following formula (2), r is defined as a component proportion (molar proportion) of a structural unit represented by the following formula (3), and s is defined as a component proportion (molar proportion) of a structural unit represented by the following formula (4), in the polymer.

$$\alpha = (p + (0.5 \times r))/(p + q + (0.5 \times r) + s) \ldots (i)$$

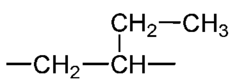
(1)

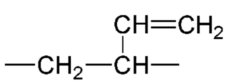
(2)

$-CH_2-CH_2-$ (3)

$$-CH_2-CH=CH-CH_2- \quad (4)$$

**2.** The block copolymer according to claim 1 comprising 20 to 90 mass% of the polymer (A1).

**3.** The block copolymer according to claim 1 comprising 50 to 80 mass% of the polymer (A1).

**4.** The block copolymer according to any one of claims 1 to 3, wherein the functional group F has at least one selected from the group consisting of a primary amino group, a secondary amino group, and a tertiary amino group.

**5.** The block copolymer according to any one of claims 1 to 4, wherein the polymer block A has the functional group F at a terminal of the polymer block A, or the polymer block B has the functional group F at a terminal of the polymer block B.

**6.** The block copolymer according to any one of claims 1 to 5,

wherein the polymer (A1) has a structure in which four or more polymer chains are allowed to bond to a partial structure derived from a coupling agent, and
the coupling agent has a functional group containing nitrogen.

**7.** The block polymer according to any one of claims 1 to 6, wherein a value $\beta$ represented by the following equation (ii) in the polymer block A is more than 0.20.

$$\beta = (p + q)/(p + q + (0.5 \times r) + s) \ldots (ii)$$

**8.** The block copolymer according to claim 7, wherein the value $\beta$ is more than 0.60.

**9.** The block copolymer according to any one of claims 1 to 8, wherein the polymer (A1) further comprises a polymer block C having a structural unit derived from a conjugated diene compound and a structural unit derived from an aromatic vinyl compound.

**10.** The block copolymer according to any one of claims 1 to 9, comprising a linear polymer (A2).

**11.** An adhesive, which is obtained by using the block copolymer according to any one of claims 1 to 10.

## Patentansprüche

**1.** Blockcopolymer, umfassend:

10 Massen-% oder mehr eines Polymers (A1) mit einer mehrfach verzweigten Struktur mit vier oder mehr Polymerketten,
wobei die Polymerkette einen Polymerblock A, der 70 Massen-% oder mehr einer Struktureinheit enthält, die von einer konjugierten Dienverbindung stammt, und einen Polymerblock B, der 70 Massen-% oder mehr einer Struktureinheit enthält, die von einer aromatischen Vinylverbindung stammt, beinhaltet,
wobei eine funktionelle Gruppe F, die mindestens ein Element ausgewählt aus der Gruppe bestehend aus Stickstoff, Sauerstoff und Schwefel enthält, an einem Teil der oder allen Enden der vier oder mehr Polymerketten enthalten ist, und
wobei das Blockpolymer einen Wert $\alpha$ von 0,83 oder mehr aufweist, der durch die folgende Gleichung (i) dargestellt wird, wobei p als ein Komponentenanteil (Molanteil) einer Struktureinheit definiert ist, die durch die folgende Formel (1) dargestellt wird, q als ein Komponentenanteil (Molanteil) einer Struktureinheit definiert ist, die durch die folgende Formel (2) dargestellt wird, r als ein Komponentenanteil (Molanteil) einer Struktureinheit definiert ist, die durch die folgende Formel (3) dargestellt wird, und s als ein Komponentenanteil (Molanteil) einer Struktureinheit definiert ist, die durch die folgende Formel (4) dargestellt wird, in dem Polymer.

$$\alpha = (p + (0{,}5 \times r))/(p + q + (0{,}5 \times r) + s)\ldots(i)$$

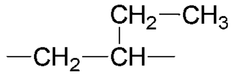
(1)

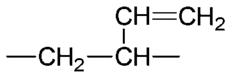
(2)

$-CH_2-CH_2-$ (3)

$-CH_2-CH=CH-CH_2-$ (4)

**2.** Blockcopolymer nach Anspruch 1, umfassend 20 bis 90 Massen-% des Polymers (A1).

**3.** Blockcopolymer nach Anspruch 1, umfassend 50 bis 80 Massen-% des Polymers (A1).

**4.** Blockcopolymer nach einem der Ansprüche 1 bis 3,
wobei die funktionelle Gruppe F mindestens eines ausgewählt aus der Gruppe bestehend aus einer primären Aminogruppe, einer sekundären Aminogruppe und einer tertiären Aminogruppe aufweist.

**5.** Blockcopolymer nach einem der Ansprüche 1 bis 4,
wobei der Polymerblock A die funktionelle Gruppe F an einem Ende des Polymerblocks A aufweist oder der Polymerblock B die funktionelle Gruppe F an einem Ende des Polymerblocks B aufweist.

**6.** Blockcopolymer nach einem der Ansprüche 1 bis 5,

wobei das Polymer (A1) eine Struktur aufweist, in der es ermöglicht ist, dass vier oder mehr Polymerketten an eine Teilstruktur, die von einem Kupplungsmittel stammt, gebunden sind, und
das Kupplungsmittel eine funktionelle Gruppe enthält, die Stickstoff enthält.

**7.** Blockpolymer nach einem der Ansprüche 1 bis 6,
wobei ein Wert β, der durch die folgende Gleichung (ii) im Polymerblock A dargestellt wird, größer als 0,20 ist.

$$\beta = (p + q)/(p + q + (0{,}5 \times r) + s)\ldots\ (ii)$$

**8.** Blockcopolymer nach Anspruch 7,
wobei der Wert β größer als 0,60 ist.

**9.** Blockcopolymer nach einem der Ansprüche 1 bis 8,
wobei das Polymer (A1) ferner einen Polymerblock C umfasst, der eine Struktureinheit, die von einer konjugierten Dienverbindung stammt, und eine Struktureinheit, die von einer aromatischen Vinylverbindung stammt, aufweist.

**10.** Blockcopolymer nach einem der Ansprüche 1 bis 9, umfassend ein lineares Polymer (A2).

**11.** Klebstoff, der unter Verwendung des Blockcopolymers nach einem der Ansprüche 1 bis 10 erhalten wird.

## Revendications

**1.** Copolymère séquencé comprenant :

10 % en masse ou plus d'un polymère (A1) ayant une structure multi-ramifiée ayant quatre chaînes polymères ou plus,
dans lequel la chaîne polymère inclut un bloc polymère A contenant 70 % en masse ou plus d'un motif structurel dérivé d'un composé diène conjugué, et un bloc polymère B contenant 70 % en masse ou plus d'un motif structurel dérivé d'un composé vinyle aromatique,

dans lequel un groupe fonctionnel F contenant au moins un élément choisi dans l'ensemble constitué par l'azote, l'oxygène et le soufre est présent à une partie ou à la totalité des extrémités des quatre chaînes polymères ou plus, et

dans lequel le polymère séquencé a une valeur a de 0,83 ou plus représentée par l'équation (i) qui suit, où p est défini comme la proportion constitutive (proportion molaire) d'un motif structurel représenté par la formule (1) qui suit, q est défini comme la proportion constitutive (proportion molaire) d'un motif structurel représenté par la formule (2) qui suit, r est défini comme la proportion constitutive (proportion molaire) d'un motif structurel représenté par la formule (3) qui suit, et s est défini comme la proportion constitutive (proportion molaire) d'un motif structurel représenté par la formule (4) qui suit, dans le polymère.

$$\alpha = (p + (0{,}5 \times r)) / (p + a + (0{,}5 \times r) + s) \quad \ldots \text{(i)}$$

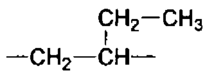
(1)

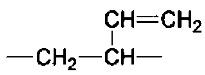
(2)

$-CH_2-CH_2-$ (3)

$-CH_2-CH=CH-CH_2-$ (4)

**2.** Copolymère séquencé selon la revendication 1, comprenant 20 à 90 % en masse du polymère (A1).

**3.** Copolymère séquencé selon la revendication 1, comprenant 50 à 80 % en masse du polymère (A1).

**4.** Copolymère séquencé selon l'une quelconque des revendications 1 à 3, dans lequel le groupe fonctionnel F a au moins l'un choisi dans l'ensemble constitué par un groupe amino primaire, un groupe amino secondaire, et un groupe amino tertiaire.

**5.** Copolymère séquencé selon l'une quelconque des revendications 1 à 4, dans lequel le bloc polymère A a le groupe fonctionnel F à une extrémité du bloc polymère A, ou le bloc polymère B a le groupe fonctionnel F à une extrémité du bloc polymère B.

**6.** Copolymère séquencé selon l'une quelconque des revendications 1 à 5, dans lequel

le polymère (A1) a une structure dans laquelle quatre chaînes polymères ou plus ont la faculté de se lier à une structure partielle dérivée d'un agent de couplage, et

l'agent de couplage a un groupe fonctionnel azoté.

**7.** Copolymère séquencé selon l'une quelconque des revendications 1 à 6, dans lequel la valeur β représentée par l'équation (ii) qui suit dans le bloc polymère A est supérieure à 0,20.

$$\beta = (p + q) / (p + q + (0{,}5 \times r) + s) \quad \ldots \text{(ii)}$$

**8.** Copolymère séquencé selon la revendication 7, dans lequel la valeur β est supérieure à 0,60.

**9.** Copolymère séquencé selon l'une quelconque des revendications 1 à 8, dans lequel le polymère (A1) comprend en outre un bloc polymère C ayant un motif structurel dérivé d'un composé diène conjugué et un motif structurel dérivé d'un composé vinyle aromatique.

**10.** Copolymère séquencé selon l'une quelconque des revendications 1 à 9, comprenant un polymère linéaire (A2).

**11.** Adhésif qui est obtenu par utilisation du copolymère séquencé de l'une quelconque des revendications 1 à 10.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6291583 B1
- US 2016333235 A1
- US 6534593 B1
- JP 2005170985 A
- JP 2014177519 A
- JP 2016079217 A
- WO 2017221943 A
- WO 2017090421 A
- JP S634841 B
- JP H137970 B